(19) Europäisches Patentamt
European Patent Office
Office européen des brevets

(11) **EP 4 269 476 A1**

(12) **EUROPEAN PATENT APPLICATION**
published in accordance with Art. 153(4) EPC

(43) Date of publication:
**01.11.2023 Bulletin 2023/44**

(21) Application number: **21911100.2**

(22) Date of filing: **24.12.2021**

(51) International Patent Classification (IPC):
*C08J 3/20* (2006.01)      *C08L 101/00* (2006.01)
*C08J 9/28* (2006.01)      *C08J 5/18* (2006.01)

(52) Cooperative Patent Classification (CPC):
**C08J 3/20; C08J 5/18; C08J 9/28; C08L 101/00**

(86) International application number:
**PCT/JP2021/048393**

(87) International publication number:
**WO 2022/138963 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **25.12.2020   JP 2020217337**
          **25.12.2020   JP 2020217226**

(71) Applicant: **Asahi Kasei Kabushiki Kaisha**
**Tokyo 1000006 (JP)**

(72) Inventors:
• **SAKAKIBARA, Yuzuru**
  **Tokyo 100-0006 (JP)**
• **SATO, Yuka**
  **Tokyo 100-0006 (JP)**
• **MIZOBUCHI, Kosuke**
  **Tokyo 100-0006 (JP)**
• **MATSUYAMA, Hayato**
  **Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **RESIN RAW MATERIAL COMPOSITION FOR MOLDING USE, RESIN RAW MATERIAL COMPOSITION FOR MICROPOROUS MEMBRANES, AND METHODS RESPECTIVE FOR PRODUCING THOSE PRODUCTS**

(57)    According to the present disclosure, a resin raw material composition comprising resin pellets, a powder and a liquid component is provided. The resin raw material composition is a resin raw material composition for molding use or a resin raw material composition for microporous membranes. The resin raw material composition comprises granular bodies in each of which the liquid component is coated on at least a portion of the surface of each of the resin pellets and the powder is adhered to the liquid component. The ratio of the mass% of the resin pellets to the mass% of the powder is 0.01 to 100 inclusive and the ratio of the mass% of the resin pellets to the mass% of the liquid component is 1 to 199 inclusive, each relative to the whole mass of the resin raw material composition. The number of the granular bodies each containing 10 or more aggregates of the resin pellets is 20% or less relative to the total number of the granular bodies.

FIG. 1

10

**Description**

FIELD

The present disclosure relates to a resin raw material composition for molding use; a resin raw material composition for a microporous membrane; and methods of producing these resin raw material compositions.

BACKGROUND

Conventionally, general-purpose plastics such as polyethylenes, engineering plastics such as polyesters, and synthetic resins such as elastomers, particularly polyolefin resins such as polyethylenes and polypropylenes, have a good balance of, for example, physical properties of their molded products, molding processability, and weather resistance, and are, therefore, widely used for blow molding of packaging films, industrial films for agricultural use and the like, and bottle containers, and injection molding of structural materials and large-sized containers, as well as production and the like of microporous membranes.

Generally, pellet-form and powder-form resin raw materials used in these applications are widely known to be molded by an extrusion molding method. Such resin raw materials are used as simple resins, or mixed with an inorganic filler, a fiber material, and the like other than a resin. There are also many cases where the resin raw materials are mixed with a filler for functionalization; a liquid raw material, for example, a plasticizer of a mineral oil such as liquid paraffin, is added to the resin raw materials in a liquid state; or the resin raw materials are mixed with additives, for example, an antifogging agent such as a glycerol ester, and an antistatic agent. Extrusion molding of pellets is disclosed in PTL 1, and extrusion molding of a powder is disclosed in PTL 2.

Many of these resin raw materials are generally sold in the form of pellets having a particle size of about 2 mm to 5 mm, while some of the resin raw materials are sold in the form of a powder having a particle size of about 50 $\mu$m to 500 $\mu$m. Further, metal oxides such as alumina, silica, zirconia, and titanium oxide, as well as fillers such as talc, boehmite, and kaolin are generally sold in the form of a powder of about 10 nm to 500 $\mu$m. In recent years, as disclosed in PTL 3, a raw material made into chips can also be produced by pulverizing a film or a microporous membrane in a non-molten state.

As for the use of microporous membranes, the market for microporous membrane-like separators used in lithium-ion secondary batteries has recently been growing especially in electric vehicle applications. PTL 2 also discloses a method of producing such a separator for lithium-ion secondary batteries.

There is an increasing number of cases where pellets and powder are mixed with a liquid material and then molded for high functionalization of the resulting molded product. Examples of such cases include separators for lithium-ion secondary batteries, which are produced by mixing a resin powder of polyethylene, polypropylene, or the like with a plasticizer such as liquid paraffin, extruding and stretching the resulting mixture, and subsequently porosifying the resultant by extraction of the plasticizer with a solvent, and technology of adding a plasticizer for softening, such as mineral oil, to pellets of polyethylene, elastomer, or polypropylene is generally employed.

Ultrahigh-molecular-weight polyethylene resins having a high viscosity-average molecular weight of more than 300,000 can yield very strong molded products or microporous membranes when molded; however, these resins have a notably high melt viscosity because of their high molecular weight, and this makes extrusion molding difficult. Accordingly, these resins are generally not sold in the form of pellets, but in the form of a polymerized powder. In order to improve the strength of ordinary polyethylene or polypropylene, such an ultrahigh-molecular-weight polyethylene powder needs to be mixed with polyethylene or polypropylene pellets before use.

These prior art are based on that pellets and powder are put into an extruder individually or after, for example, being blended in advance as required, and this method is widely and generally employed.

[CITATION LIST]

[PATENT LITERATURE]

[PTL 1] Japanese Unexamined Patent Publication (Kokai) No. S59-39536
[PTL 2] Japanese Unexamined Patent Publication (Kokai) No. 2002-194132
[PTL 3] Japanese Unexamined Patent Publication (Kokai) No. 2006-21519
[PTL 4] Japanese Unexamined Patent Publication (Kokai) No. 2019-142002

SUMMARY

[TECHNICAL PROBLEM]

In the prior art, however, there are problems in terms of molding processability and product physical properties especially when pellets and powder are blended and simultaneously used for extrusion molding, particularly film molding, as well as when pellets and powder are blended, simultaneously extrusion-molded, and then used for the production of a microporous membrane.

Problems in Molding Processability

In the production of a resin raw material composition for molding use, a method of blending large amounts of pellets and powder in advance using a tumbler mixer, a Henschel mixer, or the like is generally employed. This method allows high-volume processing and can thus reduce the production cost. In this method, classification of the pellets and the powder occurs during pipe transportation or in a stationary hopper, and this is likely to cause unevenness in the composition distribution. As a cause of this, a powder is generally several micrometers to several hundred micrometers in size and smaller than pellets having a particle size of several millimeters; therefore, classification of the pellets and the powder occurs during pipe transportation or in a stationary hopper, and this is likely to cause unevenness in the composition distribution. For example, when resin pellets of about 3 mm in size and an inorganic filler of about 5 $\mu$m or less in size are mixed at a weight ratio (resin pellets: inorganic filler) of about 8:2 and loaded into a 100-L hopper of 500 mm in diameter and 1,000 mm in height, the resin pellets and the inorganic filler are gradually classified during operation and powder is precipitated. As a countermeasure for this, for example, stirrers (agitators) can be installed at various points of the process; however, this does not provide a fundamental solution since classification occurs again immediately downstream of each installation point. In addition, a powder raw material is lightweight and therefore, it is easily blown up into the air as dust and is likely to deteriorate the working environment especially around a resin raw material supply port of an extruder (hereinafter, this property is referred to as "dustiness" or the like).

In the production of a resin raw material composition for a microporous membrane such as a separator, an extrusion molding method in which a single or plural resin raw materials and the like are kneaded and then put into an extruder is generally employed. Extrusion molding can yield molded products at a low cost and in a simple manner; therefore, it is widely utilized in film molding, blow molding, fiber molding, injection molding, and the like. However, when pellets are put into an extruder simultaneously with a filler and a resin powder, classification occurs in ordinary dry blending due to the difference in their size, and this tends to result in insufficient distribution of each raw material component. Therefore, when these materials are directly put into an extruder, dispersion and mixing thereof in the extruder are heterogeneous, and fluctuations in the extrusion condition are likely to cause variations in the thickness of the resulting membrane. For example, in film molding by an inflation method, silica for bubble opening and a blocking inhibitor such as calcium carbonate are used. This method, however, also requires to knead pellets with silica, calcium carbonate, and the like in advance, which increases the production cost.

Particularly, in those separators that are produced by a wet method and widely used as lithium-ion secondary battery separators at present, for the purpose of swelling a resin with a plasticizer, a resin powder generally having a small particle size is often used as a raw material. In recent years, however, there is an increasing number of cases where a pellet raw material is used for various purposes. Commercially available polyolefins used as main raw materials are offered in a greater variety and larger quantities as pellets than as powders; therefore, it is believed that the use of such pellets for cost reduction and the like will increase in the future. In addition, such pellets can be used together with various functional masterbatches, such as masterbatches containing a slip agent, an antistatic agent, a filler, and the like. Moreover, with the growing momentum of global environmental protection and the like in recent years, recycling of raw materials has been promoted in extrusion molding applications as well. As recycled raw materials, films and molded products are pulverized and melt-pelletized using an extruder in many cases; therefore, such recycled raw materials need to be used as pellets. In this manner, the necessity of using pellet-form resin raw materials with powders is expected to increase in the future also in separator applications.

In a common method where pellets and powder are simultaneously put into an extruder and molded in high quality, for example, the time required for kneading is increased by optimization of the screw shape of the extruder and an increase in the screw shaft length. These measures increase the energy of kneading and thus require a size increase and specialization of the equipment, which increases the production cost. In addition, due to the large difference in particle size between the powder and the pellets, classification occurs in the stage immediately before the input of the powder and the pellets to the extruder, for example, inside a feed hopper; therefore, favorable molding cannot be achieved. In this manner, the prior art does not provide a raw material composition in which pellets and powder are not classified when put into an extrusion kneader, and there is no method for favorably mixing pellets and powder.

More specifically, a powder is generally several micrometers to several hundred micrometers in size and smaller than pellets having a particle size of several millimeters; therefore, classification of the pellets and the powder occurs during pipe transportation or in a stationary hopper, and this is likely to cause unevenness in the composition distribution. For example, when resin pellets of about 3 mm in size and an inorganic filler of about 5 μm or less in size are mixed at a weight ratio (resin pellets: inorganic filler) of about 8:2 and loaded into a hopper of 500 mm in diameter, 1,000 mm in height, and about 100 L in effective capacity, the resin pellets and the inorganic filler are gradually classified during operation and powder is precipitated. As a countermeasure for this, for example, stirrers (agitators) can be installed at various points of the process; however, this does not provide a fundamental solution since classification occurs again immediately downstream of each installation point. In addition, a powder raw material is lightweight, and therefore it is easily blown up into the air as dust and likely to deteriorate the working environment especially around a resin raw material supply port of an extruder (hereinafter, this property is referred to as "dustiness" or the like).

Problems in Product Physical Properties

When unevenness is created in the composition distribution due to classification in the above-described manner, fluctuations in the extrusion condition are likely to cause variations in membrane thickness as described above; therefore, in the resulting extrusion-molded product such as a film or the resulting microporous membrane such as a separator, inadequate kneading tends to cause the generation of fisheyes and unmelted gel, worsen the thickness unevenness in the film plane, and generate unevenness in strength. Even when the unevenness in the composition distribution is resolved to an acceptable level, there are cases where the difference in shape between pellets and powder, particularly the difference in their particle size, leads to a difference in melting rate (time to melting) in an extruder, as a result of which large pellets are left unmelted or, conversely, the surfaces of the pellets are eluted early and adhere to the powder, preventing the kneading energy from being transferred to the powder and causing the powder to remain unmelted. The occurrence of such a phenomenon also leads to fluctuations in the extrusion pressure and the extrusion amount. The above-described problems are alleviated by melting and pelletizing the required raw materials in advance using a twin-screw kneader or the like; however, this does not provide a fundamental solution since the same phenomenon occurs at the time of putting the raw materials into the twin-screw kneader. In addition, not only the number of production steps is increased and this leads to a significant increase in the production cost, but also thermal degradation and shear degradation caused by transfer through multiple extruders are increased and the overall strength thus tends to be deteriorated.

In this manner, all of the above-described methods have problems in terms of molding processability and/or product physical properties, and conventional solutions not only increase the production cost but also have a narrow range of applicable component combinations due to the size difference and the mixing amount of pellets and powder, requiring fine adjustments for each component. These problems are particularly important for microporous membranes of lithium-ion secondary battery separators that have been increasingly reduced in thickness recently.

In view of the above-described circumstances, the present disclosure provides: a resin raw material composition for molding use and a resin raw material composition for a microporous membrane, which not only are excellent in dispersibility, pipe transportability, and moldability, and exhibit limited dustiness and classification, but also yield a molded product and a microporous membrane, respectively, that have favorable physical properties; and methods of producing these resin raw material compositions.

[SOLUTION TO PROBLEM]

The present inventors intensively studied to solve the above-described problems and consequently discovered that the problems can be solved by using a resin raw material composition satisfying specific requirements, and also discovered a method of producing such a resin raw material composition.

Embodiments of the present disclosure are exemplified below.

[1] A resin raw material composition, containing: resin pellets (PL); a powder (PW); and a liquid component (LQ), wherein

the resin raw material composition is a resin raw material composition for molding use,
the resin raw material composition contains granules in which the surfaces of the resin pellets are at least partially coated with the liquid component, the resin pellets coated with the liquid component are individual particles or an aggregate of plural particles, and the powder is adhered to the liquid component,
based on a total weight of the resin raw material composition, a ratio (PL/PW) of the amount (wt.%) of the resin pellets with respect to the amount (wt.%) of the powder is 0.01 to 100, and a ratio (PL/LQ) of the amount (wt.%) of the resin pellets with respect to the amount (wt.%) of the liquid component is 1 to 199, and
based on a total number of the granules, the number of granules containing an aggregate of 10 or more particles of the resin pellets is 20% or less.

[2] A resin raw material composition, containing: resin pellets (PL); a powder (PW); and a liquid component (LQ), wherein

the resin raw material composition is a resin raw material composition for a microporous membrane,
the resin raw material composition contains granules in which the surfaces of the resin pellets are at least partially coated with the liquid component, the resin pellets coated with the liquid component are individual particles or an aggregate of plural particles, and the powder is adhered to the liquid component,
based on a total weight of the resin raw material composition, a ratio (PL/PW) of the amount (wt.%) of the resin pellets with respect to the amount (wt.%) of the powder is 0.01 to 100, and a ratio (PL/LQ) of the amount (wt.%) of the resin pellets with respect to the amount (wt.%) of the liquid component is 1 to 199, and
based on a total number of the granules, the number of granules containing an aggregate of 10 or more particles of the resin pellets is 20% or less.

[3] The resin raw material composition according to [1] or [2], wherein the granules in which the powder is adhered to the liquid component of the resin pellets coated with the liquid component constitute a main component.
[4] The resin raw material composition according to any one of [1] to [3], wherein

based on a total number of the granules, the number of granules containing individual particles or an aggregate of 2 to 9 particles of the resin pellets is 95% or more, and
the amount of granules having a particle size of 10 mm or more is 1 wt.% or less based on a total weight of the resin raw material composition.

[5] The resin raw material composition according to any one of [1] to [4], wherein

based on a total number of the granules, the number of granules containing individual particles of the resin pellets is 70% or more, and
the granules containing individual particles of the resin pellets have a maximum diameter of not less than the particle size of the resin pellets but not greater than the particle size of the resin pellets + 5 mm.

[6] The resin raw material composition according to any one of [1] to [5], wherein

based on a total number of the granules, the number of granules containing an aggregate of plural particles of the resin pellets is less than 30%, and
when the resin raw material composition further contains granules that do not contain the resin pellets and are formed of the powder and the liquid component, the number of the granules that do not contain the resin pellets is less than 20%, based on a total number of the granules.

[7] The resin raw material composition according to any one of [1] to [6], wherein, based on a total number of the granules, the number of the granules containing an aggregate of 10 or more particles of the resin pellets is 1% or less.
[8] The resin raw material composition according to any one of [1] to [7], wherein the resin pellets contain at least one selected from the group consisting of polyolefin, PET, polyamide, aramid, polyvinyl chloride, synthetic rubber, ABS, and PPE.
[9] The resin raw material composition according to any one of [1] to [8], wherein the powder contains at least one selected from the group consisting of polyethylene, elastomers, PET, polyamide, aramid, and inorganic particles.
[10] The resin raw material composition according to any one of [1] to [9], wherein the powder has a particle size of 10 nm to 50 $\mu$m.
[11] The resin raw material composition according to any one of [1] to [10], wherein the liquid component is at least one selected from the group consisting of lubricating oils, mineral oils, and liquid paraffin.
[12] The resin raw material composition according to any one of [1] to [11], having a variation in the bulk density of 10% or less.
[13] The resin raw material composition according to any one of [1] to [12], having an angle of repose of 30° to 55°.
[14] A method of producing a resin raw material composition, wherein

the resin raw material composition is a resin raw material composition for molding use, and
the method includes:

a coating step of kneading resin pellets (PL) and a liquid component using a blender to coat the surfaces of the resin pellets with the liquid component at least partially; and

an adhesion step of, after the coating step, adding a powder (PW) to the blender and further kneading the resultant to adhere the powder to the liquid component of the resin pellets coated with the liquid component.

[15] The method of producing a resin raw material composition according to [14], wherein the torque rise time is 150 seconds or shorter.

[16] A method of producing a resin raw material composition, wherein

the resin raw material composition is a resin raw material composition for a microporous membrane, and the method includes:

a coating step of kneading resin pellets (PL) and a liquid component using a blender to coat the surfaces of the resin pellets with the liquid component at least partially; and

an adhesion step of, after the coating step, adding a powder (PW) to the blender and further kneading the resultant to adhere the powder to the liquid component of the resin pellets coated with the liquid component.

[17] The method of producing a resin raw material composition according to [16], wherein the torque rise time is 150 seconds or shorter.

[18] A method of producing a mixed composition, the method including:

a step of producing a resin raw material composition by the method of producing a resin raw material composition according to [16] or [17]; and

a step of further mixing the resin raw material composition with resin pellets and/or a powder that are the same as or different from the resin pellets (PL) and the powder (PW).

[ADVANTAGEIOUS EFFECTS OF INVENTION]

According to the present disclosure, a resin raw material composition for molding use, from which, particularly when the resin raw material composition is utilized for a film or microporous membrane application, a product having excellent physical properties in terms of strength, optical properties, foreign substance content, and the like can be obtained by a molding process, and which has excellent moldability of the product and excellent ease of handling, is provided. According to the present disclosure, a resin raw material composition for a microporous membrane, from which a microporous membrane having excellent physical properties can be obtained, and which has excellent moldability of the microporous membrane and excellent ease of handling, is also provided. Therefore, the resin raw material composition for molding use according to the present disclosure is favorably used particularly for molding a film or a microporous membrane.

BRIEF DESCRIPTION OF DRAWINGS

FIG. 1 is a photograph of granules of the resin raw material composition of the present disclosure.

FIG. 2 is a photograph of granules of a conventional resin raw material composition.

FIG. 3 is a graph showing the relationship between the kneading time and the average torque (torque rise time) for the resin raw material compositions of Example 1.1 and Comparative Example 1.1.

DESCRIPTION OF EMBODIMENTS

Resin Raw Material Composition

The resin raw material composition of the present disclosure contains pellets, a powder, and a liquid component (hereinafter, may be referred to as "PL", "PW", and "LQ", respectively). This resin raw material composition is a resin raw material composition for molding use, or a resin raw material composition for a microporous membrane. The resin raw material composition contains a large number of granules, including granules each of which contains a single pellet or an aggregate of plural pellets, and in which the surface(s) of the pellet(s) is/are entirely or partially coated with a liquid material and the powder is adhered to the liquid material (such granules are hereinafter referred to as "PWL"). In the present specification, granules containing a single (individual particle of) resin pellet may be referred to as "PWL1";

granules containing an aggregate of plural resin pellets may be referred to as "PWL2", "PWL3" and so on, based on the number of resin pellets; and granules which are formed of a powder and a liquid component without containing a resin pellet and have a sieve size of 1 mm to 10 mm may be referred to as "PWLO". The term "total number of granules" used herein means a total number of granules of PWL0 and PWL1 or more.

The resin raw material composition preferably contains pellets, a powder, and a liquid component as a main component. The term "main component" used herein means that a total weight of the pellets, the powder, and the liquid component is not less than 50% by weight (wt.%) with respect to a total weight of the resin raw material composition, and the total weight of the pellets, the powder, and the liquid component is preferably not less than 70 wt.%, more preferably not less than 90 wt.%, and may be substantially 100 wt.%. As described below, the resin raw material composition may also contain other components, such as additives and modifiers, in addition to the main component.

Resin Pellets

As the pellets (PL), commonly used and commercially available resin pellets may be used. As the resin of the resin pellets, any resin can be used, and it is selected from, for example, polyolefin, polyethylene terephthalate (PET), polybutylene terephthalate (PBT), polyacrylonitriles (PAN), polyamide, aramid, polyvinyl chloride, synthetic rubber, acrylonitrile-butadiene-styrene copolymer resin (ABS), and polyphenylene benzobisoxazole (PPE). The material of the resin pellets is preferably at least one selected from the group consisting of polyolefin, PET, polyamide, aramid, polyvinyl chloride, synthetic rubber, ABS, and PPE. The resin pellets preferably contain a polyolefin as a main component. The term "main component" used herein means that the amount of the polyolefin is not less than 50 wt.% with respect to a total weight of the resin pellets, and the amount of the polyolefin is preferably not less than 70 wt.%, more preferably not less than 90 wt.%, and may be substantially 100 wt.%. The polyolefin is, for example, a polypropylene (PP), a polyethylene (PE), or an olefin-based elastomer.

The polypropylene is not particularly limited, and examples thereof include: propylene homopolymers, such as isotactic polypropylenes (IPP), syndiotactic polypropylenes, and atactic polypropylenes; and random copolymers (RPP), block copolymers (BPP), and terpolymers, which are obtained by copolymerization of propylene with a comonomer such as ethylene, butene, or $\alpha$-olefin having 5 or more carbon atoms. These polypropylenes may be used singly, or in combination as a mixture.

The resin of the resin pellets has a viscosity-average molecular weight (Mv) of preferably 1,000,000 or less, more preferably 700,000 or less, still more preferably 600,000 or less, since this makes it easy to perform melt-kneading, as a result of which fisheye-like defects tend to be improved when the resin raw material composition is made into a film or a microporous membrane. Further, from the standpoint of strength, the resin of the resin pellets has a viscosity-average molecular weight of not less than 100,000, more preferably not less than 200,000. When the resin pellets are made of a polypropylene, from the same standpoint, the polypropylene has a viscosity-average molecular weight (Mv) of preferably 1,000,000 or less, more preferably 700,000 or less, still more preferably 600,000 or less, but preferably not less than 100,000, more preferably not less than 200,000.

As defined in "DICTIONARY OF POLYMER TECHNOLOGY" (Editorial Board of Dictionary of Polymer Technology, Taiseisha, Ltd. 2000, 6th edition, page 337), the term "fisheye" used herein refers to a small spherical lump that is generated in a film-like or sheet-like molded product or a microporous membrane and given such a name since it is transparent like the eyes of fish. Examples of fisheye include various kinds of lumps that are differentiated by the cause of generation, such as unmelted lumps generated by inadequate kneading of molding materials, lumps generated by partial gelation of a raw material, lumps generated by partial degradation of a material during molding, and lumps generated on foreign substances serving as nuclei. In the present specification, however, the term "fisheye" refers to a lump originating from a material of the resin raw material composition used as a raw material of a molded product, and excludes any lump generated on a foreign substance serving as a nucleus. Examples of the foreign substance include cellulose, dust, metal fragments, resin carbide, plastics of different kinds, lint, and paper fragments.

As the resin of the resin pellets, a polypropylene whose stereoregularity is controlled by utilizing a metallocene catalyst or the like, or a resin obtained by blending 0.5 to 30 wt.% of BPP or RPP with IPP is also preferred. By using such a polypropylene, for example, the permeability tends to be improved in a microporous membrane application.

The resin of the resin pellets may also be a mixture of a polyethylene and a polypropylene. Examples of the polyethylene include high-density polyethylenes, ultrahigh-molecular-weight polyethylenes, linear low-density polyethylenes, high-pressure low-density polyethylenes, and mixtures thereof. The polyethylene may be one which utilizes a metallocene catalyst and has a narrow molecular weight distribution, a high-density polyethylene, or a polyethylene obtained by multi-stage polymerization. Among the above-described polyethylenes, from the standpoint of reducing heat shrinkage in the case of molding a film or a microporous membrane, it is preferred to use a linear high-density polyethylene obtained by ionic polymerization, an ultrahigh-molecular-weight polyethylene, or a mixture thereof. The term "ultrahigh-molecular-weight polyethylene" used herein refers to a polyethylene having a viscosity-average molecular weight of 500,000 or more. The ratio of an ultrahigh-molecular-weight polyethylene in the whole polyethylene is preferably 5 to 50 wt.% and, from the standpoint of dispersibility, it is more preferably 9 to 40 wt.%. In this case, however, the ultrahigh-molecular-weight polyethylene is generally used in a powder form and thus categorized as "powder".

The polyethylene preferably contains a polyethylene component having a molecular weight of less than 10,000. The term "polyethylene component having a molecular weight of less than 10,000" used herein refers to a moiety having a molecular weight of less than 10,000 in a chart of molecular weight distribution measured by gel permeation chromatography (GPC), and the ratio thereof can be determined from the area ratio on the chart. In the membrane production performed under specific conditions, the polyethylene component having a molecular weight of less than 10,000 partially moves to the surface of the resulting microporous membrane, and consequently exerts an effect of reducing the polypropylene amount on the surface. As for a method of incorporating such a polyethylene component having a molecular weight of less than 10,000 into the polyethylene, the polyethylene may be produced by setting the polymerization conditions such that a large amount of a low-molecular-weight component is incorporated during polymerization of the polyethylene, or the polyethylene may be produced by mixing an ordinary polyethylene with a polyethylene component having a weight-average molecular weight of less than 10,000.

The content of the polyethylene component having a molecular weight of less than 10,000 is preferably 5 wt.% or more with respect to a total polyethylene amount and, in this range, friction is reduced during the production of a film or a microporous membrane, so that the productivity tends to be improved. The content of the polyethylene component is more preferably 10 wt.% or more and, in this range, the ease of winding tends to be improved in the secondary processing step of the film or the microporous membrane. Further, when the content of the polyethylene component is 20 wt.% or more, processing can be performed at a much higher speed, so that the productivity tends to be improved. Meanwhile, from the standpoint of improving the strength of the film or the microporous membrane, the content of the polyethylene component is preferably 50 wt.% or less. From the standpoint of further improving the reduction of friction, a polyethylene component having a molecular weight of less than 1,000 is preferably incorporated in an amount of 1 wt.% or more.

The resin of the resin pellets may also contain, as a resin other than the polypropylene and the polyethylene, a polybutene-1 resin, a propylene-based elastomer, or an ethylene-based elastomer, particularly a propylene-ethylene random copolymer elastomer, for the purpose of improving the film/membrane formability. A polymethylpentene-1 resin can be used as well, and one having a melt flow rate (MFR) of 0.01 to 30 g/10 min is preferably used. The melt flow rate (MFR) is particularly preferably in a range of 0.1 to 5 g/10 min.

As the resin of the resin pellets, in addition to the above-described resins, it is also possible to use, for example, a thermoplastic resin selected from: engineering plastic resins such as polyphenylene ether; polyamide resins such as nylon 6, nylon 6-12, and aramid resin; polyimide resins; polyester resins such as PET and PBT; polycarbonate resins; fluorine-based resins such as polyvinylidene fluoride (PVDF); copolymers of ethylene and vinyl alcohol; copolymers of a C2-C12 $\alpha$-olefin and carbon monoxide, and hydrogenation products thereof; hydrogenation products of styrene-based polymers; copolymers of styrene and an $\alpha$-olefin, and hydrogenation products thereof; copolymers of styrene and an aliphatic monounsaturated fatty acid; polymers of acrylic acid and an acrylic acid derivative; and copolymers of styrene and a conjugated diene-based unsaturated monomer, and hydrogenation products thereof.

From the standpoint of extrusion moldability, the resin pellets have a particle size of preferably about 1 mm to 10 mm, more preferably 2 mm to 6 mm, still more preferably 3 mm to 5 mm. A method of producing the pellets is not limited and, for example, in the case of a high-density polyethylene, a powder of the polyethylene having a particle size of several ten to several hundred micrometers, which is obtained by a low-pressure polymerization method, is melt-kneaded in an extruder heated to about 200°C, and then cut into particles of about 1 mm to 5 mm in size by strand cutting or underwater cutting. Pellets produced in accordance with the method disclosed in PTL 4 by producing films once and then press-bonding and cutting the films can be utilized as well.

The ratio of the resin pellets in a total weight of the resin raw material composition is preferably 5 wt.% to 98 wt.%, more preferably 30 wt.% to 98 wt.%.

Powder

The term "powder (PW)" used herein means fine particles of several nanometers to several hundred micrometers in size. The ratio of the powder in a total weight of the resin raw material composition is preferably 5 wt.% to 90 wt.%, more preferably 8 wt.% to 50 wt.%. The powder is preferably resin particles, inorganic particles, or the like; however, the powder may be, for example, particles of pulverized fiber, particles of a naturally-occurring material such as wood chips, or fine metal particles.

As the resin particles, for example, particles of any of the resins exemplified above for the resin pellets can be used. The types, the molecular weights, and the like of the resins are as described above in the section of "Resin Pellets"; therefore, description thereof is omitted here. Examples of a method of producing the resin particles include pulverization of a polymerized resin or pellets thereof.

Examples of the resin particles include powders of, for example, polyethylene, polypropylene, an elastomer, PET, polyamide, and aramid, among those resins exemplified above for the resin pellets. The resin particles preferably contain a polyolefin as a main component. The term "main component" used herein means that the amount of the polyolefin is not less than 50 wt.% with respect to a total weight of the resin pellets, and the amount of the polyolefin is preferably not less than 70 wt.%, more preferably not less than 90 wt.%, and may be substantially 100 wt.%. The polyolefin is, for example, preferably a polyethylene, a polypropylene, or an olefin-based elastomer, more preferably a polyethylene.

From the standpoint of improving the strength of a film or a microporous membrane, the viscosity-average molecular weight (Mv) of the resin particles is preferably not less than 200,000, more preferably not less than 300,000. From the standpoint of extrusion moldability and stretchability, an upper limit of this viscosity-average molecular weight (Mv) is preferably 10,000,000 or less, more preferably 5,000,000 or less. From the standpoint of improving the strength of a film or a microporous membrane, the viscosity-average molecular weight (Mv) of a polyethylene powder (when plural kinds of polyethylenes are used, the viscosity-average molecular weight of the polyethylenes as a whole) is preferably not less than 200,000, more preferably not less than 300,000. From the standpoint of extrusion moldability and stretchability, an upper limit of this viscosity-average molecular weight (Mv) is preferably 10,000,000 or less, more preferably 5,000,000 or less. When the polyethylene powder is mixed and kneaded with an inorganic filler or the like, from the standpoint of improving the kneadability and thereby inhibiting the generation of particulate defects caused by secondary aggregation of the inorganic filler, the molecular weight distribution (Mw/Mn) of the polyethylene powder is preferably not less than 5, more preferably not less than 8. As described above, from the standpoint of reducing heat shrinkage in the case of molding a film or a microporous membrane, a powder of an ultrahigh-molecular-weight polyethylene may be used as well.

The resin particles have a diameter smaller than size of the pellets, and the average diameter is preferably 300 μm or less. In the case of a polymerized powder, when the average diameter is 300 μm or less, the reaction time is shortened in the production thereof, so that excellent productivity is obtained. The diameter of the resin particles is preferably 200 μm or less, more preferably 100 μm or less. A lower limit value is not particularly limited; however, from the standpoint of inhibiting dust explosion during pneumatic transport and the like at the time of molding, the lower limit value is adjusted as appropriate and may be, for example, 10 μm or more, 50 μm or more, or 100 μm or more.

The ratio of the resin particles in a total weight of the resin raw material composition is preferably 5 wt.% to 90 wt.%, more preferably 10 wt.% to 50 wt.%.

Examples of the inorganic particles include particles of: oxide-based ceramics, such as alumina (e.g., $\alpha$-alumina), silica, titania, zirconia (including yttria-modified zirconia), magnesia, ceria, yttria, zinc oxide, and iron oxide; nitride-based ceramics, such as silicon nitride, titanium nitride, and boron nitride; ceramics, such as silicon carbide, calcium carbonate, aluminum sulfate, aluminum hydroxide, potassium titanate, talc, kaolin clay, kaolinite (kaolin), halloysite, pyrophyllite, montmorillonite, sericite, mica, amesite, bentonite, asbestos, zeolite, calcium silicate, magnesium silicate, diatomaceous earth, and silica sand; and glass fibers, and these inorganic particles may be used singly, or as a mixture of plural kinds thereof. Thereamong, the inorganic particles are preferably particles of at least one selected from the group consisting of silica, alumina, zeolite, kaolin, talc, zirconia, and titania.

The ratio of the inorganic particles in a total weight of the resin raw material composition is preferably 3 wt.% to 90 wt.%, more preferably 5 wt.% to 55 wt.%.

The particle size of the inorganic particles is not particularly limited; however, it is, for example, 10 nm to 50 μm. Various particle sizes can be selected depending on the intended purpose. For example, when hydrophobic inorganic particles are used for improving the wettability with an organic solvent, in order to improve the dispersibility in a resin and the surface area, particles having a relatively small average particle size of, for example, 5 nm to 1 μm, preferably about 5 nm to 100 nm, may be used. The use of inorganic particles having an average particle size of 1 μm to 10 μm tends to improve the strength of a film or a microporous membrane, and the use of inorganic particles having an average particle size of 1.5 μm to 5 μm tends to improve the unevenness in thickness that occurs at the time of film/membrane formation. The bulk specific gravity (bulk density) of the inorganic particles is about 0.05 g/cm$^3$ to 10 g/cm$^3$, preferably 0.1 to 5 g/cm$^3$. The above-described powders may be used singly, or as a mixture of plural kinds thereof.

Liquid Component

The resin raw material composition contains a liquid component, whereby the pellets and the powder are integrated with each other, and dust generated by the powder can be reduced. The liquid component (LQ) is not particularly limited as long as it is in a liquid form and can reduce dustiness. The liquid component (LQ) is preferably a lubricating oil or a mineral oil that is used as a plasticizer in the production of a molded product or a microporous membrane, and may be, for example, a phthalic acid ester such as dioctyl phthalate (DOP) or dibutyl phthalate (DBP), liquid paraffin, other plasticizer, a softening agent, or an antifogging agent, which contributes to the performance expression of a product obtained by extrusion molding. The liquid component (LQ) is preferably at least one selected from the group consisting of lubricating oils, mineral oils, and liquid paraffin. When the molded product is used as a microporous membrane, the plasticizer such as liquid paraffin is mostly or entirely removed from a final product. Because of this function of the liquid component, a powder that is generally easily classifiable from the pellets and has a property of being blown up into the air as dust in a workplace, for example, a nanofiller having a particle size of about 5 nm to 50 nm, can also be used favorably.

The viscosity of the liquid component is not particularly limited and, when a resin powder having a relatively large particle size of, for example, 100 $\mu$m or more is used, the liquid component preferably has a relatively high viscosity, and the kinematic viscosity (JIS K2283) of the liquid component at 40°C is preferably 50 mm$^2$/S or higher, more preferably 60 mm$^2$/S or higher. When the viscosity is high, the liquid component exhibits favorable adhesion to the pellets, so that the pellets and the powder are unlikely to be separated during transport and the like.

The ratio of the liquid component in a total weight of the resin raw material composition is preferably 0.1 wt.% to 30 wt.%, more preferably 2 wt.% to 7 wt.%.

Granules

The granules are formed such that the surfaces of the resin pellets are at least partially coated with the liquid component, the resin pellets coated with the liquid component are in the state of individual particles or an aggregate of plural particles, and the powder is adhered to the liquid component. Based on a total number of the granules, the number of granules (PWL10 or more) containing an aggregate of 10 or more particles of the resin pellets is 20% or less. When the number of PWL10 or more is small, a resin raw material composition which exhibits limited classification and is excellent in dispersibility, pipe transportability, moldability, and various physical properties can be provided.

In order to obtain such a resin raw material composition having a small number of PWL10 or more, the mixing ratio by weight of PL, LQ, and PW is desired to be appropriate. First, a ratio (PL/PW) of the amount (wt.%) of the resin pellets with respect to the amount (wt.%) of the powder is preferably from a lower limit of 1/99 to an upper limit of about 99.01/0.99 (0.01 to 100), more preferably from a lower limit of 1/99 to an upper limit of 99/1 (0.01 to 99), still more preferably from a lower limit of 10/90 to an upper limit of 95/5 (0.11 to 19), yet still more preferably from a lower limit of 50/50 to an upper limit of 95/5 (1 to 19), particularly preferably from a lower limit of 66.7/33.3 to an upper limit of 95/5 (2 to 19), especially preferably from a lower limit of 70/30 to an upper limit of 90/10 (2.3 to 9). The ratio PL/PW is preferably, for example, 2 to 100. When the ratio PL/PW is in a range of higher than the upper limit value, an increase in the adhesiveness of the resin raw material composition tends to make pipe transportation difficult. When the ratio PL/PW is less than the lower limit value, classification is likely to occur due to insufficient adhesion between the pellets and the powder, and dust tends to be generated by the powder.

Further, a ratio (PL/LQ) of the amount (wt.%) of the resin pellets with respect to the amount (wt.%) of the liquid component is preferably from a lower limit of 50/50 to an upper limit of 99.5/0.5 (1 to 199), more preferably from a lower limit of 50/50 to an upper limit of 99/1 (1 to 99), still more preferably from a lower limit of 70/30 to an upper limit of 99/1 (2.3 to 99), yet still more preferably from a lower limit of 70/30 to an upper limit of 98/2 (2.3 to 49), further preferably from a lower limit of 80/20 to an upper limit of 97/3 (4 to 32.3). When the ratio (PL/LQ) is in this range, stable dispersibility is obtained. When the ratio (PL/LQ) is higher than the upper limit value, since PL is unlikely to be coated with LQ, dust generation and classification are likely to occur. When the ratio (PL/LQ) is less than the lower limit value, LQ is in excess and causes stickiness, which tends to deteriorate the pipe transportability.

A ratio (PW/LQ) of the amount (wt.%) of the powder with respect to the amount (wt.%) of the liquid component is preferably in a range of a lower limit of 20/80 to an upper limit of 99/1 (0.25 to 99), more preferably from a lower limit of 30/70 to an upper limit of 95/5 (0.43 to 19), still more preferably from a lower limit of 40/60 to an upper limit of 90/10 (0.67 to 9). When the powder and the liquid component are mixed at a mixing ratio in this range and then kneaded using an appropriate means such as a tumbler mixer or a Henschel mixer, the outer surfaces of the pellets are coated with the liquid component, and the powder is likely to moderately adhere to the resin pellets. When the ratio (PW/LQ) is 0.25 or higher, the adhesion of the powder is improved, while when the ratio (PW/LQ) is 99 or lower, stickiness of the resin raw material composition caused by the liquid component is reduced, so that the pipe transportability tends to be improved.

In the resin raw material composition, the maximum diameter of the granules (PWL1) containing individual particles of the resin pellets is preferably not less than the particle size of the resin pellets, more preferably greater than the particle size of the resin pellets, but preferably not greater than the particle size of the resin pellets + 5 mm, more preferably not greater than the particle size of the resin pellets + 4 mm, still more preferably not greater than the particle size of the resin pellets + 3 mm, yet still more preferably not greater than the particle size of the resin pellets + 2 mm, further preferably not greater than the particle size of the resin pellets + 1 mm. When the maximum diameter of the granules (PWL1) containing individual particles of the resin pellets is in this range, since the amount of granules in which the powder excessively adheres to the surfaces of the resin pellets is small, classification can be further inhibited, so that the pipe transportability tends to be further improved.

The resin raw material composition preferably contains, as a main component, granules in which the powder adheres to the liquid component of the resin pellets coated with the liquid component. The term "main component" used herein means that the amount of the granules is not less than 50 wt.% with respect to a total weight of the resin raw material composition, and the amount of the granules is preferably not less than 70 wt.%, more preferably not less than 90 wt.%, and may be substantially 100 wt.%.

From the standpoint of ease of handling, low dustiness, and moldability, the number of granules of individual particles (PWL1) and granules of 2 to 9 particles (PWL2 to PWL9) is preferably 95% or more based on a total number of granules; and the amount of granules having a particle size of 10 mm or more is preferably 1 wt.% or less based on a total weight of the resin raw material composition. From the same standpoint, the number of granules containing plural particles of the resin pellets is preferably less than 30%, more preferably less than 20%, based on a total number of granules; and, when the resin raw material composition further contains granules (PWL0) that are formed of the powder and the liquid component without containing the resin pellets, the number of PWL0 is preferably less than 20%, more preferably less than 10%, based on a total number of granules. It is noted here that "PWLO" means granules having a sieve size of 1 mm to 10 mm. The presence of a large amount of lumps of less than 1 mm in size or more than 10 mm in size leads to deterioration of the dispersion condition. From the same standpoint, the number of granules (PWL10 or more) containing 10 or more particles of the resin pellets is 20% or less, preferably 1% or less, based on a total number of granules, and it is more preferred that the resin raw material composition contains substantially no PWL10 or more.

It is particularly preferred that the number of PWL1 be 70% or more based on a total number of granules, and that the maximum diameter of the granules (PWL1) containing individual particles of the resin pellets be not less than the particle size of the resin pellets but not greater than the particle size of the resin pellets + 5 mm. By controlling the ratio of the number of PWL1 to be a certain value or more and reducing the maximum diameter of PWL1, a resin raw material composition that is particularly excellent in ease of handling, low dustiness, and moldability can be obtained.

Bulk Density

Particularly when an inorganic filler is used, the bulk density of the resin raw material composition is greatly affected by the specific gravity of the inorganic filler; however, for the use of the resin raw material composition as a general raw material, the bulk density is preferably 0.1 g/cm$^3$ to 2 g/cm$^3$, more preferably 0.3 g/cm$^3$ to 1.5 g/cm$^3$, still more preferably 0.5 g/cm$^3$ to 1.2 g/cm$^3$. Further, a variation in the bulk density is preferably 10% or less, more preferably 5% or less, still more preferably 3% or less. When the bulk density and the variation thereof are in the above-described respective ranges, the amount of supply to an extruder is stabilized, so that the uniformity of the resulting film product or microporous membrane is improved.

Angle of Repose

The resin raw material composition preferably has an angle of repose of 30° to 55°. When the angle of repose is in this range, the resin raw material composition can be favorably used in a raw material hopper and a supply feeder of an ordinary extrusion molding machine.

Torque Rise Time

The resin raw material composition preferably has a torque rise time of 150 seconds or shorter in a PLASTOMILL kneader (manufactured by Toyo Seiki Seisaku-sho, Ltd.). The term "torque rise time" used herein means the time required for the torque of the PLASTOMILL kneader to increase and eventually reach a peak from the start of kneading. A short torque rise time means that the resin pellets and the liquid component are sufficiently kneaded in the below-described step (a), and that the liquid component is substantially uniformly adhered to almost the entire surfaces of the resin pellets. As a result, a stable structure is likely to be obtained as PWL1 having a maximum diameter of not greater than the particle diameter of the resin pellets + 5 mm.

Other Components

In the resin raw material composition, in addition to the pellets, the powder, and the liquid component, other resin components in different forms as well as additives such as an inorganic filler, an antioxidant, a dispersing aid, an antistatic agent, a process stabilizer, a crystal nucleating agent, and an organic filler may be incorporated for the purposes of modification, cost reduction, and the like. The ratio of each of these components in the resin raw material composition is preferably 5 wt.% or less, more preferably 2 wt.% or less, and it may be substantially 0 wt.%.

Examples of the antioxidant include: phenolic antioxidants, such as "IRGANOX 1010", "IRGANOX 1076", and "BHT" (all of which are trademarks and manufactured by Ciba Specialty Chemicals Inc.); phosphorus-based and sulfur-based secondary antioxidants; and hindered amine-based anti-weathering agents, and these may be used singly, or in combination of plural kinds thereof depending on the intended purpose. Particularly, a combination of a phenolic antioxidant and a phosphorus-based antioxidant is preferably used. Specifically, pentaerythrityl-tetrakis[3-(3,5-di-t-butyl-4-hydroxyphenyl)propionate], octadecyl-3-(3,5-di-t-butylhydroxyphenyl)propionate, 1,3,5-trimethyl-2,4,6-tris(3,5-di-*t*-butylhydroxybenzyl)benzene, tris(2,4-di-t-butylphenyl)phosphite, tetrakis(2,4-di-t-butylphenyl)-4,4'-biphenylene phosphite, and the like are preferred. Further, 6-[3-(3-t-butyl-4-hydroxy-5-methylphenyl)propoxy]-2,4,8,10-tetra-*t*-butyldibenzo[d,f][1,3,2]dioxaphosphepine and the like are preferred as well. The amount of the antioxidant to be incorporated is preferably 100 ppm to 10,000 ppm with respect to a total weight of the resin pellets of the resin raw material composition. When a phenolic antioxidant and a phosphorus-based antioxidant are used in combination, their weight ratio (phenolic antioxidant/phosphorus-based antioxidant) is preferably 1/3 to 3/1.

When the resin raw material composition is used for molding a microporous membrane, particularly in the production of a microporous membrane by extrusion molding, the resin raw material composition preferably contains pellets of a polypropylene as the resin pellets, and a crystal nucleating agent for the purpose of controlling the crystallinity of the polypropylene to control the formation of micropores. The type of the crystal nucleating agent is not particularly limited, and examples thereof include general benzyl sorbitol-based crystal nucleating agents (e.g., "GEL ALL" (trademark, manufactured by New Japan Chemical Co., Ltd.)), metal phosphates, and metal carboxylates such as aluminum t-butylbenzoate, specifically bis(p-ethylbenzylidene)sorbitol, bis(4-methylbenzylidene)sorbitol, bis(3,4-dimethylbenzylidene)sorbitol, and bis-benzylidene sorbitol. The amount of the crystal nucleating agent to be incorporated varies depending on the desired crystallization conditions; however, it is, with respect to the amount of the polypropylene, preferably 100 ppm or more from the standpoint of allowing crystallization to proceed quickly and improving the moldability, but preferably 10,000 ppm or less from the standpoint of inhibiting excessive bleeding caused by excess crystal nucleating agent. The amount of the crystal nucleating agent to be incorporated is more preferably 100 ppm to 2,000 ppm with respect to the amount of the polypropylene. In the production of a microporous membrane using an ordinary plasticizer, the resulting microporous membrane using a polyethylene is likely to exhibit a permeability when liquid paraffin or a phthalic acid ester-based plasticizer is used; however, a polypropylene tends to yield smaller pores and have poor permeability as compared to a polyethylene. As a means for improving the permeability of the polypropylene, a method of adjusting the pores to have an appropriate size is effective and, for example, by utilizing the crystal nucleating agent, the phase separation rate is adjusted, so that an appropriate pore structure is easily formed.

In addition, as a dispersing aid of the polypropylene and the polyethylene, for example, a hydrogenated styrene-butadiene-based elastomer or an elastomer obtained by copolymerization of ethylene and propylene can be used as required. The amount of the dispersing aid to be incorporated is not particularly limited; however, it is preferably 1 to 10 parts by weight with respect to a total of 100 parts by weight of the polypropylene and the polyethylene.

Examples of the antistatic agent include: amine-based antistatic agents, such as alkyldiethanolamines and hydroxyalkylethanolamines; amine esters, such as stearyldiethanolamine mono-fatty acid esters; alkyloamides, such as lauric acid diethanolamide and stearic acid diethanolamide; mono-fatty acid esters, such as glycerin and diglycerin; anionic antistatic agents, such as alkylbenzenesulfonates; and polyoxyethylene alkyl ethers, and these antistatic agents may be used singly, or in combination of plural kinds thereof. The amount of the antistatic agent to be incorporated is not particularly limited; however, it is preferably about 500 to 10,000 ppm with respect to a total weight of the resin pellets of the resin raw material composition.

Mixed Composition Containing Resin Raw Material Composition

When the resin raw material composition of the present disclosure is a resin raw material composition for a microporous membrane, the resin raw material composition for a microporous membrane may be used for molding a microporous membrane by itself, or in the form of a mixed composition obtained by further blending the resin raw material composition with pellets (PL) and/or a powder (PW). In other words, a desired mixed composition can be produced by using the resin raw material composition for a microporous membrane according to the present disclosure as a masterbatch. The PL and/or the PW to be additionally blended may be of the same materials as, or materials different from those of the PL and the PW contained in the resin raw material composition for a microporous membrane. For example, a mixed composition may be obtained by producing a resin raw material composition for a microporous membrane (raw material A) that has a PL/PW/LQ ratio of, for example, 85/10/5 (blending ratio by weight) using polypropylene pellets as the PL, a polyethylene powder as the PW, and a mineral oil as the LQ, and further adding and blending thereto a polyethylene powder (raw material B) that is the same as or different from the polyethylene powder used in the raw material A. In this case, since the PW has already adhered to the PL of the raw material A, there is an advantage that dry blending thereof with the PW of the raw material B is unlikely to cause classification of the resulting mixed composition. According to this method, the resultant can be adjusted to have a desired composition by a simple so-called dry-blend method; therefore, the productivity can be extremely improved.

Method of Producing Resin Raw Material Composition

The method of producing a resin raw material composition according to the present disclosure includes the following steps (a) and (b) when the resin raw material composition is a resin raw material composition for molding use:

(a) the coating step of kneading resin pellets and a liquid component using a blender to coat the surfaces of the resin pellets with the liquid component at least partially; and
(b) the adhesion step of, after the coating step, adding a powder to the blender and further kneading the resultant to adhere the powder to the liquid component of the resin pellets coated with the liquid component.

Each component may be added at once or in several portions. In the step (a) and/or the step (b), additives other than the above-described components may be added as well. The pellets and the powder may be added not only in the step (a), but also in the step (b) as appropriate. As the blender used in the steps (a) and (b), a blender such as a tumbler mixer or a Henschel mixer is favorably used. The blender can be used at normal temperature. In the step (b), when a tumbler mixer is used, the liquid component causes a large amount of the powder and the pellets to adhere to the inside of the blender after blending. The unadhered raw materials in the central part may be used as is, or the adhered materials may be scraped off using a spatula or the like and further blended to be mixed with the raw material in the central part. The same also applied to the case of using a Henschel mixer in the step (b). It is noted here that, in the method of producing a resin raw material composition for a microporous membrane, after the step (a) or (b), preferably after the step (b), lumps having a large particle size may be removed using a sieve having a mesh size of about 10 mm.

The method of producing a resin raw material composition according to the present disclosure includes the following steps (a') and (b') when the resin raw material composition is a resin raw material composition for a microporous membrane:

Step (a'): the coating step of mixing resin pellets and a liquid component using a blender to coat the surfaces of the resin pellets with the liquid component at least partially; and
Step (b'): the adhesion step of, after the coating step, adding a powder to the blender and further kneading the resultant to adhere the powder to the liquid component of the resin pellets coated with the liquid component.

Each component may be added at once or in several portions. In the step (a') and/or the step (b'), additives other than the above-described components may be added as well. The pellets and the powder may be added not only in the step (a'), but also in the step (b') as appropriate. As the blender used in the steps (a') and (b'), a blender such as a tumbler mixer or a Henschel mixer is favorably used. The blender can be used at normal temperature. In the step (b'), when a tumbler mixer is used, the liquid component causes a large amount of the powder and the pellets to adhere to the inside of the blender after blending. The unadhered raw materials in the central part may be used as is, or the adhered materials may be scraped off using a spatula or the like and further blended to be mixed with the raw material in the central part. The same also applied to the case of using a Henschel mixer in the step (b'). It is noted here that, in the method of producing a resin raw material composition for a microporous membrane, after the step (a') or (b'), preferably after the step (b'), lumps having a large particle size may be removed using a sieve having a mesh size of about 10 mm.

In the method of producing a resin raw material composition according to the present disclosure, in order to obtain stable PWL1 having a maximum diameter of not greater than the particle size of the resin pellets + 5 mm, the mixing ratio by weight of PL, LQ, and PW is desired to be appropriate. The mixing ratio by weight is described above in the section of "Granules"; therefore, description thereof is omitted here.

The resulting resin raw material composition has a torque rise time of preferably 150 seconds or shorter in a PLASTOMILL. The details of the torque rise time are described above; therefore, description thereof is omitted here.

One example of the method of producing a resin raw material composition will now be described. As the step (a), resin pellets and a liquid component are put into a blender and kneaded. By this, the surfaces of the resin pellets are moderately wetted with the liquid component. Preferably, the entire surfaces of the resin pellets are uniformly coated with the liquid component. Next, as the step (b), a powder is added to the blender, followed by stirring. Different blenders may be used in the step (a) and the step (b), or the powder may be added to the same blender containing the resin pellets coated with the liquid component in the step (a) to perform the step (b). By the step (b), the powder adheres to the liquid component on the surfaces of the resin pellets, whereby the resin raw material composition of the present disclosure can be obtained. Granules of the resulting resin raw material composition preferably have a PWL1 maximum diameter of not greater than the particle size of the resin pellets + 5 mm, the PWL1 has a stable structure. Subsequently, the resin raw material composition is put into a hopper of an arbitrary molding machine, such as an extruder. The resin raw material composition of the present disclosure is hardly classified in the hopper and generates only a small amount of dust; therefore, the resin raw material composition of the present disclosure is excellent in ease of handling and low dustiness. In addition, since the pellets and the powder are integrated with each other, classification thereof is unlikely to occur. These materials are quickly and uniformly dispersed and melted once kneading thereof is started in a barrel immediately below the hopper of the extruder. Therefore, the resin raw material composition of the present disclosure is also excellent in moldability.

As one example of the steps (a) and (b), a case of blending commercially available polyethylene pellets (PL1) with a commercially available blocking inhibitor (PW1) as the powder and subsequently kneading the resultant with a mineral oil (LQ1) as the liquid component will now be described. As the step (a), first, 20 kg of PL1 is weighed, and LQ1 is added thereto, followed by 10-minute stirring in an 80-L tumbler mixer. By this, the surfaces of PL1 are moderately wetted with LQ1. Next, as the step (b), PW1 is added, and this is followed by stirring for another 5 minutes. The amount of the addition can be adjusted such that a post-mixing composition ratio (% by weight) of, for example, PL1/PW1/LQ1 = 92/5/3 is obtained. The resin raw material composition produced in this manner may be applied to a sieve having a mesh size of about 10 mm to remove large granules.

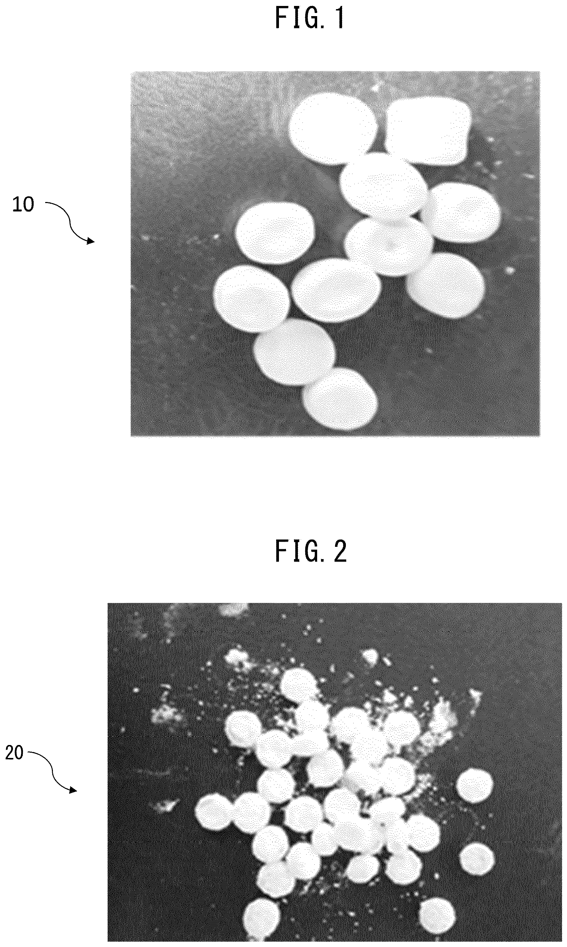

FIG. 1 shows one example of granules of a resin raw material composition (10) according to the present disclosure. In this example, granules each consisting of a single particle of pellet (PWL1 granules) are contained as a main component. In this resin raw material composition, PWL2 to PWL10 granules each having plural particles of pellets may be contained as well, but in a relatively small amount. Further, granules consisting of only the powder and the liquid component, and dust of the powder are hardly observed, or substantially not contained. Accordingly, the resin raw material composition is excellent in ease of handling, low dustiness, and moldability.

One example of a method of producing a conventional resin raw material composition will now be described. In this method, resin pellets and a powder are put into a blender and kneaded first, and a liquid component is then added to the blender, followed by kneading. Thus, the surfaces of the resin pellets cannot be entirely and uniformly coated with the liquid component, and the resulting resin raw material composition contains large granules formed of the liquid component and the powder, as well as large granules formed by aggregation of a large amount of the powder around the resin pellets. It is presumed that such granules are formed as a result that the liquid component adheres to the parts having a large amount of the powder and to the blender wall before uniformly adhering to the surfaces of the resin pellets, and large lumps of the powder consequently grow on the blender wall and collapse. When this resin raw material composition is subsequently put into a hopper of an extruder, classification is likely to occur, and the ease of handling is thus poor. Even when kneading of this resin raw material composition is started in a barrel immediately below the hopper of the extruder, the materials are unlikely to be uniformly dispersed and melted; therefore, the conventional resin raw material composition has poor moldability.

Another example of a method of producing a conventional resin raw material composition will now be described. In this method, resin pellets and a powder are put into a blender at once to produce a dry-blended resin raw material composition. Subsequently, the thus obtained resin raw material composition is put into a hopper of an extruder; however, in this process, not only classification is likely to occur and the ease of handling is poor, but also dust of the powder is generated.

One example of a method of producing a conventional resin raw material composition for a microporous membrane will now be described. In this method, a raw material composition obtained by dry-blending only plural kinds of powder is generally used. However, there is no case where a powder and pellets are mixed and used in a wet method. Accordingly, in order to use a powder and pellets simultaneously in a wet method, the pellets and the powder would be put into a blender (stirrer), such as a Henschel mixer, and dry-blended. However, the powder and the pellets are likely to be classified due to a large difference in their particle size. In order to reduce this classification, it is considered adding thereto a liquid component; however, a liquid component causes integration of the plural resin pellets with a large amount of the powder. Consequently, the resulting resin raw material composition for a microporous membrane contains large granules formed of the liquid component and the powder, as well as large granules formed by aggregation of a large amount of the powder around the resin pellets. It is presumed that such granules are formed as a result that the liquid component adheres to the parts having a large amount of the powder and to the blender wall before uniformly adhering to the surfaces of the resin pellets, and large lumps of the powder consequently grow on the blender wall and collapse. When this resin raw material composition for a microporous membrane is subsequently put into a hopper of an extruder, classification is likely to occur, and the ease of handling is thus poor. Even when this resin raw material composition is put into the extruder and kneading is started, the materials are unlikely to be uniformly dispersed and melted; therefore, a large number of fisheyes are generated, deteriorating the moldability of the conventional resin raw material composition for a microporous membrane.

Another example of a method of producing a conventional resin raw material composition for a microporous membrane will now be described. In this method, resin pellets and a powder are put into a blender at once to produce a dry-blended resin raw material composition for a microporous membrane. Subsequently, the thus obtained resin raw material composition for a microporous membrane is put into a hopper of an extruder; however, in this process, not only classification is likely to occur and the ease of handling is poor, but also dust of the powder is generated.

FIG. 2 shows one example of granules of a conventional resin raw material composition (30) produced by the above-described dry-blend method. In this example, it can be seen that classification is likely to occur due to the difference in size between the resin pellets and the powder dust, and that the dustiness is high due to a large amount of powder dust.

Method of Producing Mixed Composition

The resin raw material composition for a microporous membrane according to the present disclosure, which is produced by the steps (a') and (b'), can be further blended with a powder and/or pellets to be used as a mixed composition (this process is hereinafter referred to as "the step (c')). The step (c') can be performed using an ordinary blender, such as a Henschel mixer or a tumbler mixer. In the step (c'), following the step (b'), a powder and/or pellets may be added to the blender used in the step (b'), or a blender different from the one used in the step (b') may be used.

EXAMPLES

Measurement and Evaluation Methods

Content (wt.%) of PL, PW, and LQ in Resin Raw Material Composition, and Ratio of PWL

Measurements were performed by the following procedures.

1. Numbers of PWL0, PWL1, PWL2, and PWL10 or More, and Ratio of PWL1 to 9

In a container, 5 g (about 250 to 500 particles) of a resin raw material composition was sampled. The numbers of PWL0, PWL1, PWL2, and PWL10 or more were counted, and the ratio of each PWL (% by number) was calculated. Further, a total weight of PWL1 to 9 was measured, and the ratio thereof (wt.%) with respect to a total weight (5 g) of the resin raw material composition was determined.

2. Measurement of Ratios (wt.%) of PL, PW, and LQ

One hundred particles of PWL1 were collected and the weight thereof ($W_T$) was measured. These particles were washed with a solvent dissolving only the liquid component (e.g., methylene chloride when the liquid component was liquid paraffin), and PL and PW were recovered by filtration, followed by measurement of their weight ($W_{PL+PW}$). From the value of $W_T - W_{PL+PW}$, the weight ($W_{LQ}$) and the weight ratio (wt.%) of LQ were calculated. Next, PL and PW were separated by screening, and the weights ($W_{PL}$ and Wpw) and the weight ratios (wt.%) of PL and PW were calculated.

3. Measurement of Ratio (wt.%) of Particles Having Particle Size of 10 mm or More

In a container, 50 g (about 2,500 to 5,000 particles) of a resin raw material composition was sampled, and classified through a sieve having a mesh size of 10 mm. The weight of particles having a particle size of 10 mm or more was measured, and the ratio thereof (wt.%) with respect to a total weight (50 g) was determined.

Particle Size

Together with powder, pellets, and granules, the particle size of particles of about 0.05 mm (50 $\mu$m) or larger in size was measured under a microvideoscope manufactured by KEYENCE Corporation, while that of smaller particles was measured under a scanning electron microscope. The diameter (maximum diameter) of a circle circumscribing a particle to be measured was defined as particle size, and the average particle size was determined for randomly selected 100 particles.

Dispersibility (Torque Rise Time)

Measurement was performed by the following procedures using an apparatus PLASTOMILL R-60 manufactured by Toyo Seiki Seisaku-sho, Ltd. at a rotor diameter of 30 mm.
Procedures:

1. A resin raw material composition and liquid paraffin were prepared. These materials were mixed with a stirring rod in a cup such that the amount of liquid paraffin was 30 wt.% after the mixing. A total amount of these materials was set at 48 g.
2. The PLASTOMILL manufactured by Toyo Seiki Seisaku-sho, Ltd. was set at a temperature of 200°C and a rotation speed of 30 rpm in an air atmosphere.
3. The resin raw material composition prepared in the procedure 1 was quickly put into the PLASTOMILL, and kneading was started immediately. The time of the completion of the raw material addition was defined as "0 minutes".

4. The time required for the kneading torque of the PLASTOMILL to increase and eventually reach a peak was measured.

This measurement method provides as an index of the ease of kneading (dispersibility) in an actual extruder. In ordinary extrusion molding of a resin raw material, melting is started in a short time, and the screw torque needs to rise in an extruder. When this rise of torque is slow, the kneading capacity of the extruder is not sufficiently exerted, resulting in defective dispersion.

The dispersibility was evaluated by the following criteria based on the torque rise time.

A: The torque rise time was 150 seconds or shorter.
B: The torque rise time was longer than 150 seconds, but 200 seconds or shorter.
C: The torque rise time was longer than 200 seconds, but 300 seconds or shorter.
D: The torque rise time was longer than 300 seconds.

Variation in Bulk Density

Measurement was performed by the following method conforming to JIS Z2504. The resin raw material composition according to the present disclosure, in an amount of 20 kg, was put into a raw material hopper having a circular truncated cone shape of 600 mm in height, 400 mm in upper diameter, and 250 mm in lower diameter, in which the lower part was constituted by a hemispherical dome and provided with an opening for extraction of the raw material from the bottom end of the dome. Immediately thereafter, the resin was extracted from the upper surface of the raw material into a 200-cc cup five times, and the first bulk density was determined from the average weight of the extracted resin. Subsequently, 15 kg of the raw material was extracted from the lower opening of the hopper, and the second bulk density was determined in the same manner. In this process, a bulk density ratio (first bulk density/second bulk density) was defined as the variation in bulk density. The variation in bulk density was evaluated as follows.

A: The bulk density ratio was in a range of 0.95 to 1.05.
B: The bulk density ratio was in a range of higher than 0.90 but lower than 0.95, or higher than 1.05 but 1.10 or lower.
C: The bulk density ratio was lower than 0.90, or higher than 1.10.

Classification Performance

The resin raw material composition according to the present disclosure was sampled in an amount of 200 g and randomly put into a cylindrical polyethylene sample vial having an outer diameter of 79 mm and a capacity of 500 cc. This vial was shaken for 5 minutes using a commercially available small shaker (KENIS MINI SHAKER 3D 33180556 manufactured by KENIS, Ltd., shaking amplitude: about 7°, shaking rate: 30 rpm). Thereafter, 10 g of the resin raw material composition was recovered from each of an upper part (a part having a height of about 1/10) of the vial and a bottom part (a part having a height of about 1/10) of the vial, and the number of pellet particles therein was counted to determine the number ratio (upper part/bottom part). In this measurement, a number ratio of about 1.0 represents good classification performance. The classification performance was evaluated as follows.

A: The number ratio was 0.9 or higher but lower than 1.1.
B: The number ratio was in a range of 0.85 or higher but lower than 0.9, or higher than 1.1 but 1.15 or lower.
C: The number ratio was lower than 0.85 or higher than 1.15.

Angle of Repose

The angle of repose was determined using an apparatus conforming to JIS 9301-2-2. A sample in an amount of 200 g was supplied from a height of about 40 mm from the upper margin of a funnel at a rate of 20 g to 60 g per minute. In this process, the falling rate was maintained constant. The sample in an amount of 200 g was supplied from the funnel, and the angle formed by a slope created by the sample and a horizontal plane was measured using a protractor. The thus measured angle was evaluated as follows.

A: The angle was in a range of 30° to 55°.
B: The angle was smaller than 30°, or larger than 55°.

Dustiness (Dust Generation)

A resin raw material composition in an amount of 500 cc was put into a measuring cup and dropped from a height of 30 cm onto a rectangular black paper of 30 cm or more on each side and, five seconds thereafter, rising dust was visually observed from a side and evaluated. It is noted here that a black board was arranged in the background to make it easier to observe the rising dust. The dustiness was evaluated based on the following criteria.

A: No rising dust was observed or, if any, the height thereof was 15 cm or less.
B: Rising dust was generated at a height of more than 15 cm.

Pipe Transportability

A resin raw material composition to be measured was prepared in an amount of 5 kg, and transported to a height of 2 m using a pneumatic transport autoloader connected with a polyvinyl chloride hose of 10 m in length. The bulk density ratio before and after the transport (before transport/after transport) was determined in the same manner as the above-described measurement method of "Variation in Bulk Density".

A: The bulk density ratio was in a range of 0.95 to 1.05.
B: The bulk density ratio was in a range of higher than 0.90 but lower than 0.95, or higher than 1.05 but 1.10 or lower.
C: The bulk density ratio was lower than 0.90, or higher than 1.10.

Fisheyes of Resin Raw Material Composition for Molding Use

A resin raw material composition for molding use was put into a twin-screw extruder having a screw diameter of 30 mm and an LID value of 35, kneaded at a prescribed temperature (230°C), extruded through a 300-mm T-die, and then cooled on a casting roll to obtain a 1 mm-thick unstretched original sheet. This original sheet was cut out in a size of 8 mm $\times$ 8 mm and stretched at a ratio of 4 times $\times$ 4 times using a batch-type biaxial stretching machine, whereby a film was produced. The thus obtained stretched film was cut out in a size of 20 cm $\times$ 20 cm, and fisheyes having a diameter of 0.5 mm or more were counted. It is noted here that evaluation was made by converting the counted number into a value per 10 g of the film.

A: The number of fisheyes was 5/10 g or less.
B: The number of fisheyes was 6 to 20/10 g.
C: The number of fisheyes was more than 20/10 g.

Fisheyes of Resin Raw Material Composition for Microporous Membrane

To a resin raw material composition for a microporous membrane which contained liquid paraffin as a plasticizer, liquid paraffin as a plasticizer was further added, and the resultant was mixed. The amount of liquid paraffin was adjusted to be 65% by weight after the mixing, and the resulting raw material was put into a twin-screw extruder having a screw diameter of 30 mm and an LID value of 35, kneaded at a prescribed temperature (230°C), extruded through a 300-mm T-die, and then cooled on a casting roll to obtain a 0.5 mm-thick unstretched original sheet. This original sheet was cut out in a size of 8 mm $\times$ 8 mm and stretched at a ratio of 7 times $\times$ 7 times using a batch-type biaxial stretching machine, whereby a film was produced. This stretched film was immersed in an excess amount of dichloromethane and then dried, and the plasticizer was removed by extraction to obtain a microporous membrane. The thus obtained microporous membrane was cut out in a size of 20 cm $\times$ 20 cm, and fisheyes having a diameter of 0.5 mm or more were counted. It is noted here that evaluation was made by converting the counted number into a value per 10 g of the microporous membrane.

A: The number of fisheyes was 5/10 g or less.
B: The number of fisheyes was 6 to 20/10 g.
C: The number of fisheyes was more than 20/10 g.

Thickness ($\mu$m) of Microporous Membrane

The thickness of a sample was measured using a micro-thickness meter manufactured by Toyo Seiki Seisaku-sho, Ltd. (type: KBN, probe diameter: $\Phi$5 mm, measurement pressure: 62.47 kPa) at an ambient temperature of 23 $\pm$ 2°C.

Porosity (%) of Microporous Membrane

The basis weight W (g/cm$^2$) and the average density $\rho$ (g/cm$^3$) of components (resin and additives) constituting a microporous membrane were calculated based on the weight of a 100 mm-square sample of the microporous membrane, and the porosity was calculated based on the thickness d (cm) of the microporous membrane using the following equation:

$$ Porosity = (W/(d \times \rho)) \times 100\ (\%) $$

Porosity Ratio of Layers (Porosity of Layer A/Porosity of Layer B)

For example, in the case of a three-layer film of layer A/layer B/layer A that was peelable, the layers were peeled off and the porosity ratio was determined by the above-described method. In the case of a wet method where the layers may not be peelable, the volume concentration P of the solvent contained in each layer (denoted as $P_A$ for the layer A and $P_B$ for the layer B) and the thickness D at a cross-section observed under an SEM (the thickness of the layer A and that of the layer B are denoted as $D_A$ and $D_B$, respectively) were measured, and the porosity of the layer A and that of the layer B were determined as $V_A$ and $V_B$, respectively, by simultaneously solving the following two equations:

$$ \text{Equation 1: Porosity of all layers} = (P_A \times D_A \times 2 + P_B \times D_B \times 1)/\text{Thickness of all layers} $$

$$ \text{Equation 2: } (V_A/V_B) = (P_A/P_B) $$

Air Permeability (sec/100 cc) of Microporous Membrane

The air permeability was measured in accordance with JIS P-8117 using a Gurley air permeability tester "G-B2" (manufactured by Toyo Seiki Seisaku-sho, Ltd., trademark). It is noted here that the values shown in Tables below are 20 $\mu$m-equivalent air permeability values that were determined by proportional calculation based on a total thickness.

Puncture Strength (g) of Microporous Membrane

The puncture strength was determined by conducting a puncture test using a handy compression tester "KES-G5" (manufactured by Kato Tech Co., Ltd., trademark) under the following conditions: radius of curvature of needle tip = 0.5 mm, and puncture speed = 2 mm/sec.

Examples 1.1 to 1.18

Resin raw material compositions for molding use were produced by the following steps using the pellets, the powder, and the liquid material shown in Tables 1, 2 and 3 in the respective combinations shown in Table 4.

(a) A prescribed amount of pellets was put into a 80-L tumbler mixer, and a liquid component was further added thereon. In this process, the liquid component was put into the central part such that adhesion of the liquid component to the wall of the mixer was prevented as much as possible. Subsequently, the added materials were stirred for 10 minutes.
(b) Thereafter, a prescribed amount of powder was added, followed by stirring for another 10 minutes. As for the ratio of PL/PW/LQ, PL, PW, and LQ were added at the respective composition ratios shown in Tables 4 and 5 such that a total amount thereof was 20 kg.

In all of Examples 1.1 to 1.18, stickiness was not observed, and the number of granules containing an aggregate of 10 or more resin pellet particles was 20% or less. These resin raw material compositions for molding use were favorable in all of the dispersibility, the pipe transportability, the classification performance, and the dustiness. The variation in bulk density (classification performance), the angle of repose, and the fisheye were also all favorable.

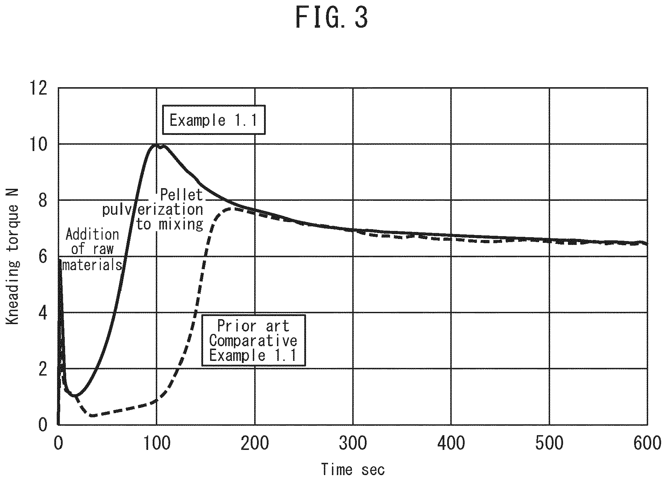

The solid line of FIG. 3 represents the torque rise time in Example 1.1. The average torque reached a peak in about 100 seconds after the addition of the raw materials (start of kneading), and it is thus seen that the dispersibility was favorable as compared to Comparative Example 1.1 (about 180 seconds).

Comparative Examples 1.1 to 1.5

In Comparative Example 1.1, a resin raw material composition for molding use was produced by a dry-blend method using the same formulation of powder and pellets as in Example 1.4 without adding LQ. Due to the absence of LQ, the powder and the pellets were completely separated, causing classification during transport and in the hopper, as well as dust generation. The production method of Comparative Example 1.2 was based on the same method as the one employed in Example 1.1; however, since the formulation used therein was outside the scope of the present disclosure, sufficient performance was not obtained. The broken line of FIG. 3 represents the torque rise time in Comparative Example 1.2. The average torque reached a peak in about 180 seconds after the addition of the raw materials (start of kneading), and it is thus seen that the dispersibility was poor as compared to Example 1.1 (about 100 seconds). Comparative Examples 1.3 and 1.4 employed the same method as in Example 1.1, except for the formulation. In Comparative Example 1.5, the formulation was the same as in Example 1.4; however, the raw materials were added all at once and stirred for 20 minutes in the step (a), and the step (b) was not performed. In Comparative Example 1.3, classification and dust generation occurred due to insufficient binding of the powder and the pellets. In Comparative Example 1.4, the liquid component was in excess and adhesive. Therefore, PWL10 and PWL0 particles were generated in a large amount. In Comparative Example 1.5, since all of the raw materials of pellets, powder, and liquid component were stirred at once, no individual particle was generated and the resulting particles were all PWL10 or more. As a result, the dispersibility and the pipe transportability were notably poor.

Table 1. Pellets

| | | Particle size (maximum diameter) mm | MFR 190°C g/10 min | MFR 230°C g/10 min | Density kg/m$^3$ | Mv |
|---|---|---|---|---|---|---|
| PL1 | LDPE | 6 | 2 | - | 920 | 70,000 |
| PL2 | HDPE1 | 5 | 0.05 | - | 954 | 200,000 |
| PL3 | PP | 5 | - | 0.4 | 900 | 950,000 |
| PL4 | EL | 4 | - | 6 | 870 | 60,000 |

LDPE: low-density polyethylene (viscosity-average molecular weight = 70,000)
HDPE1: high-density polyethylene (viscosity-average molecular weight = 200,000)
PP: polypropylene (viscosity-average molecular weight = 950,000)
EL: elastomer (viscosity-average molecular weight = 60,000)

Table 2. Powder

| PW1 | HDPE2 | Average particle size: 200 μm, Mv: 2,000,000 |
|---|---|---|
| PW2 | Filler 1 | Primary particle size: 13 nm, dry silica |
| PW3 | Filler 2 | Average particle size: 3 μm, talc |

Table 3. Liquid Component

| LQ1 | liquid paraffin, kinematic viscosity: 68 mm$^2$/s (cst) |
|---|---|

Table 4

| | | Ex. 1.1 | Ex. 1.2 | Ex. 1.3 | Ex. 1.4 | Ex. 1.5 | Ex. 1.6 | Ex. 1.7 | Ex. 1.8 | Ex. 1.9 | Ex. 1.10 | Ex. 1.11 | Ex. 1.12 |
|---|---|---|---|---|---|---|---|---|---|---|---|---|---|
| Pellets | Type | LDPE1 | LDPE1 | LDPE1 | LDPE1 | LDPE1 | LDPE1 | LDPE1 | HDPE1 | PP1 | EL | PP1 | HDPE1 |
| | wt.% | 10 | 50 | 90 | 80 | 10 | 20 | 63 | 80 | 85 | 77 | 80 | 80 |
| Powder | Type | Filler 1 | Filler 1 | Filler 1 | Filler 1 | Filler 1 | Filler 1 | Filler 1 | Filler 1 | HDPE2 | Filler 2 | Filler 2 | HDPE2 |
| | wt.% | 80 | 35 | 5 | 15 | 87 | 50 | 20 | 15 | 12 | 16 | 15 | 15 |
| Liquid component | Type | LQ1 | LQ1 | LQ1 | LQ1 | LQ1 | LQ1 | LQ1 | LQ1 | LQ1 | LQ1 | LQ1 | LQ1 |
| | wt.% | 10 | 15 | 5 | 5 | 3 | 30 | 17 | 5 | 3 | 7 | 5 | 5 |
| PL/PW | | 0.13 | 1.4 | 18 | 5.3 | 0.11 | 0.40 | 3.2 | 5.3 | 7.1 | 4.8 | 5.3 | 5.3 |
| PW/LQ | | 8 | 2 | 1 | 3 | 29 | 2 | 1 | 3 | 4 | 2 | 3 | 3 |
| PL/LQ | | 1 | 3 | 18 | 16 | 3 | 1 | 4 | 16 | 28 | 11 | 16 | 16 |
| Ratio of PWL0 | % | 3 | 5 | 1 | 0 | 0 | 2 | 0 | 0 | 0 | 0 | 0 | 0 |
| Ratio of PWL1 | % | 85 | 75 | 90 | 98 | 90 | 73 | 76 | 98 | 98 | 98 | 98 | 98 |
| Ratio of PWL2 | % | 12 | 20 | 9 | 2 | 10 | 22 | 22 | 2 | 2 | 2 | 2 | 2 |
| Ratio of PWL1 0 or more | % | 0 | 0 | 0 | 0 | 0 | 3 | 2 | 0 | 0 | 0 | 0 | 0 |
| Difference in diameter between PWL and pellets (Diameter of PWL - Diameter of pellets) | mm | 3.2 | 0.6 | 0.1 | 0.2 | 3.3 | 1.5 | 0.3 | 0.2 | 0.1 | 0.2 | 0.2 | 0.2 |
| Ratio of PWL1 to PWL9 | % | 97 | 95 | 99 | 100 | 100 | 95 | 98 | 100 | 100 | 100 | 100 | 100 |
| Ratio of particles having particle size of 10 mm or larger | wt.% | 4 | 0 | 0 | 0 | 4 | 0 | 0 | 0 | 0 | 0 | 0 | 0 |
| Dispersibility (torque rise time) | | A | A | A | A | B | B | A | A | A | A | A | A |
| Pipe transportability | | A | A | A | A | B | B | B | A | A | A | A | A |
| Classification performance | | B | A | A | A | B | B | A | A | A | A | A | A |
| Dustiness | | A | A | A | A | A | A | A | A | A | A | A | A |
| Variation in bulk density | | A | A | A | A | B | B | B | A | A | A | A | A |

(continued)

| | Ex. 1.1 | Ex. 1.2 | Ex. 1.3 | Ex. 1.4 | Ex. 1.5 | Ex.1.6 | Ex. 1.7 | Ex. 1.8 | Ex. 1.9 | Ex. 1.10 | Ex. 1.11 | Ex. 1.12 |
|---|---|---|---|---|---|---|---|---|---|---|---|---|
| Angle of repose | A | A | A | A | A | A | A | A | A | A | A | A |
| Fisheye | A | A | A | A | B | B | A | A | A | A | A | A |

Table 5

| | | Ex. 1.13 | Ex. 1.14 | Ex. 1.15 | Ex. 1.16 | Ex. 1.17 | Ex. 1.18 | Comp. Ex. 1.1 | Comp. Ex. 1.2 | Comp. Ex. 1.3 | Comp. Ex. 1.4 | Comp. Ex. 1.5 |
|---|---|---|---|---|---|---|---|---|---|---|---|---|
| Pellet | Type | LDPE1 | PP1 | PP1 | PP1 | PP1 | HDPE1 | LDPE1 | LDPE1 | LDPE1 | LDPE1 | LDPE1 |
| | wt.% | 60 | 85 | 90 | 93 | 94 | 94.4 | 83 | 90 | 99.2 | 40 | 80 |
| Powder | Type | Filler 1 | Filler 2 | Filler 2 | Filler 2 | Filler 2 | Filler 2 | Filler 1 | Filler 1 | Filler 1 | Filler 1 | Filler 2 |
| | wt.% | 20 | 10 | 5 | 5 | 5 | 5 | 17 | 9.6 | 0.5 | 10 | 15 |
| Liquid component | Type | LQ1 | LQ1 | LQ1 | LQ1 | LQ1 | LQ1 | - | LQ1 | LQ1 | LQ1 | LQ1 |
| | wt.% | 20 | 5 | 5 | 2 | 1 | 0.6 | 0 | 0.4 | 0.3 | 50 | 5 |
| PL/PW | | 3.0 | 8.5 | 18 | 19 | 19 | 19 | 4.9 | 9.4 | 198.0 | 4.0 | 5.3 |
| PW/LQ | | 1 | 3 | 1 | 3 | 5 | 8 | - | 24.0 | 1.0 | 0.2 | 3.0 |
| PL/LQ | | 3 | 16 | 18 | 47 | 94 | 157 | - | 225 | 198 | 1 | 16.0 |
| Ratio of PWL0 | % | 2 | 0 | 0 | 0 | 0 | 0 | - | 0 | 0 | 0 | 0 |
| Ratio of PWL1 | % | 50 | 98 | 99 | 100 | 100 | 100 | - | 100 | 100 | 0 | 5 |
| Ratio of PWL2 | % | 30 | 2 | 1 | 0 | 0 | 0 | - | 0 | 0 | 0 | 5 |
| Ratio of PWL10 or more | % | 18 | 0 | 0 | 0 | 0 | 0 | - | 0 | 0 | 100 | 90 |
| Difference in diameter between PWL and pellet (Diameter of PWL - Diameter of pellet) | mm | 0.3 | 0.2 | 0.1 | 0.1 | 0.1 | 0.1 | 0.2 | 0.1 | 0.0 | 0.2 | largely variable |
| Ratio of PWL1 to PWL9 | % | 80 | 0 | 0 | 0 | 0 | 0 | - | 100 | 100 | 0 | 10 |
| Ratio of particles having particle size of 10 mm or larger | wt.% | 0 | 0 | 0 | 0 | 0 | 0 | 0 | 0 | 0 | 0 | 2 |
| Dispersibility (torque rise time) | | B | A | A | A | A | A | B | B | B | D | D |
| Pipe transportability | | B | A | A | A | A | A | C | C | B | C | C |
| Classification performance | | A | A | A | A | A | A | C | C | C | (-) | (-) |
| Dustiness | | A | A | A | A | A | A | B | B | B | A | A |
| Variation in bulk density | | B | A | A | A | A | A | C | C | B | C | C |
| Angle of repose | | A | A | A | A | A | A | B | B | B | B | B |

| | Ex. 1.13 | Ex. 1.14 | Ex. 1.15 | Ex. 1.16 | Ex. 1.17 | Ex. 1.18 | Comp. Ex. 1.1 | Comp. Ex. 1.2 | Comp. Ex. 1.3 | Comp. Ex. 1.4 | Comp. Ex. 1.5 |
|---|---|---|---|---|---|---|---|---|---|---|---|
| Fisheye | B | A | A | A | A | A | B | B | B | C | C |

Examples 2.1 to 2.22

Resin raw material compositions for microporous membrane were produced by the following steps using the pellets, the powder (resin powder or filler), and the liquid material shown in Tables 6, 7, and 8 in the respective combinations shown in Tables 9 and 10.

Step (a'): A prescribed amount of pellets was put into a tumbler mixer, and a liquid component was further added thereon. In this process, the liquid component was put into the central part such that adhesion of the liquid component to the wall of the mixer was prevented as much as possible. Subsequently, the added materials were stirred for 10 minutes at 15 rpm.

Step (b'): Thereafter, a prescribed amount of a powder was added, followed by stirring for another 10 minutes. As for the ratio of PL/PW/LQ, PL, PW, and LQ were added at the respective composition ratios shown in Table 9 and 10 such that a total amount thereof was 20 kg. At this point, when the lid of the mixer was once opened, a large amount of the pellets was found adhering to the wall of the mixer; however, when the adhering pellets were scraped into the mixer using a spatula or the like and further stirred for 5 minutes, an entirely homogeneous resin raw material composition for a microporous membrane was obtained. The thus obtained resin raw material composition for a microporous membrane was favorable in all of the dispersibility, the pipe transportability, the classification performance, and the dustiness. The variation in bulk density (classification performance), the angle of repose, and the fisheye were also all favorable. The results thereof are shown in Tables 9 and 10.

In Examples 2.1, 2.2, and 2.4 to 2.10, the resin raw material compositions for microporous membrane shown in Tables 9 and 10 were each used as is. In Examples 2.3 and 2.11 to 2.22, after each of the resin raw material compositions for microporous membrane shown in Tables 9 and 10 was obtained, as the step (c'), the respective powder shown in Tables 11 and 12 was additionally added and this was followed by blending, whereby a mixed composition was obtained. The materials were favorably blended in the step (c') as well.

The above-produced resin raw material composition for a microporous membrane or mixed composition was put into a twin-screw extruder having a screw diameter of 44 mm. With regard to Examples 2.3 and 2.11 to 2.22, the pellets had already been coated with the powder; therefore, classification did not occur even when the powder was further added and the resultant was put into the twin-screw extruder in the step (c'), so that a favorable mixed state was maintained.

As a plasticizer, liquid paraffin was added from the middle of the cylinder of the extruder. The polymer content at the time of extrusion performed after the addition of liquid paraffin, which is calculated by the following equation: {Total weight (g) of resin component/Total weight (g) of composition after addition of liquid paraffin} $\times$ 100 (wt.%), was adjusted to be 33 wt.%. The extrusion was performed at an extrusion temperature of 200°C, and a sheet-form molten resin extruded from a T-die at the tip of the extruder was guided to a casting roll having a roll temperature of 90°C and solidified by cooling, whereby an unstretched original sheet having a prescribed thickness was obtained. Further, this unstretched original sheet was introduced to a biaxial stretching machine, and simultaneously and biaxially stretched by 7 times in length $\times$ 7 times in width at a temperature of 120°C, after which the plasticizer was removed by extraction with methylene chloride. This sheet was further introduced to a heat treatment apparatus to obtain a microporous membrane. The heat treatment temperature was adjusted to be in a range of 130 to 135°C. The thickness was adjusted to be about 9 $\mu$m. The thus obtained microporous membrane had favorable dispersion of the resin therein and was favorable in terms of air permeability, puncture strength, and the like as a microporous membrane. The results thereof are shown in Tables 11 and 12. The results of the membrane production in Examples 2.1 to 2.22 indicate that the resin raw material composition for a microporous membrane according to the present disclosure has no problem in terms of microporous membrane formability and product physical properties.

Comparative Examples 2.1 to 2.5

In Comparative Example 2.1, a resin raw material composition for a microporous membrane was produced by a dry-blend method using the same formulation of powder and pellets as in Example 2.4 without adding LQ. Due to the absence of LQ, the powder and the pellets were completely separated, causing classification during transport and in the hopper, as well as dust generation. The production method of Comparative Examples 2.2 to 2.4 was based on the same method as the one employed in Example 2.1; however, sufficient performance was not obtained.

Comparative Examples 2.3 and 2.4 employed the same method as in Example 2.1, except for the formulation. In Comparative Example 2.5, the raw materials were added all at once and stirred for 20 minutes in the step (a), and the step (b) was not performed. In Comparative Example 2.3, classification and dust generation occurred due to insufficient binding of the powder and the pellets. In both of Comparative Examples 2.4 and 2.5, the liquid component was in excess and adhesive. Therefore, particles of PWL10 and PWL0 were generated in a large amount. In Comparative Example 2.5, since all of the raw materials of pellets, powder, and liquid component were stirred at once, no individual particle was generated and the resulting particles were all PWL10 or more. As a result, the dispersibility and the pipe transportability were notably poor.

With regard to Comparative Examples 2.1 to 2.5, the formability and the physical properties of microporous membrane were verified using the respective resin raw material compositions for a microporous membrane shown in Tables 9 and 10 as is. Since there were problems in dispersion and the like of these raw material compositions, membranes were produced by devising the way of putting each composition into an extruder. Defective dispersion was observed in all of these Comparative Examples and, especially in Comparative Example 2.4, not only defective dispersion was prominent and many fisheyes were generated, but also the puncture strength was markedly reduced as compared to other Comparative Examples.

Reference Example

A resin raw material composition for a microporous membrane was produced using only the powder (PW2) shown in Table 7, and the dispersibility, the pipe transportability, the classification performance, the dustiness, the variation in bulk density, the angle of repose, and the fisheye were evaluated.

Table 6. Pellets

|     |       | Particle size (maximum diameter) mm | MFR 190°C g/10 min | MFR 230°C g/10 min | Density kg/m$^3$ | Mv |
|-----|-------|-------------------------------------|--------------------|--------------------|------------------|-----|
| PL1 | HDPE1 | 5 | 0.05 | - | 954 | 200,000 |
| PL2 | PP    | 5 | -    | 0.4 | 900 | 950,000 |
| PL3 | EL    | 4 | -    | 6   | 870 | 60,000 |
| HDPE1: high-density polyethylene (viscosity-average molecular weight = 200,000)<br>PP: polypropylene (viscosity-average molecular weight = 950,000)<br>EL: elastomer (viscosity-average molecular weight = 60,000) | | | | | | |

Table 7. Powder

| PW1 | HDPE2    | Average particle size: 200 $\mu$m, Mv: 6,000,000 |
|-----|----------|--------------------------------------------------|
| PW2 | HDPE3    | Average particle size: 200 $\mu$m, Mv: 400,000 |
| PW3 | Filler 1 | Primary particle size: 13 nm, dry silica |
| PW4 | Filler 2 | Average particle size: 3 $\mu$m, talc |
| PW5 | PP2      | Average particle size: 200 $\mu$m, Mv: 1,000,000 |

Table 8. Liquid Component

| LQ1 | liquid paraffin, kinematic viscosity: 68 mm$^2$/s (cst) |
|-----|---------------------------------------------------------|

Table 9. Production and Evaluation of Resin Raw Material Compositions for Microporous Membrane

| | | Reference Ex. | Ex. 2.1 | Ex. 2.2 | Ex. 2.3 | Ex. 2.4 | Ex. 2.5 | Ex. 2.6 | Ex. 2.7 | Ex. 2.8 | Ex. 2.9 | Ex. 2.10 | Ex. 2.11 | Ex. 2.12 | Ex. 2.13 | Ex. 2.14 |
|---|---|---|---|---|---|---|---|---|---|---|---|---|---|---|---|---|
| Pellet | Type | - | PL1 | PL1 | PL1 | PL1 | PL1 | PL1 | PL1 | PL1 | PL1 | PL1 | PL1 | PL1 | PL2 | PL3 |
| | wt.% | - | 83 | 82 | 82 | 40 | 70 | 95 | 94 | 97 | 90 | 83 | 28 | 28 | 60 | 60 |
| Liquid component | Type | - | LQ1 | LQ1 | LQ1 | LQ1 | LQ1 | LQ1 | LQ1 | LQ1 | LQ1 | LQ1 | LQ1 | LQ1 | LQ1 | LQ1 |
| | wt.% | - | 9 | 3 | 3 | 20 | 5 | 1 | 4.5 | 1.5 | 2.5 | 2 | 12 | 12 | 10 | 10 |
| Powder | Type | PW2 | PW2 | PW2 | PW2 | PW2 | PW2 | PW2 | PW2 | PW2 | PW3 | PW4 | PW3 | PW4 | PW4 | PW4 |
| | wt.% | 100 | 8 | 15 | 15 | 40 | 25 | 4 | 1.5 | 1.5 | 7.5 | 15 | 60 | 60 | 30 | 30 |
| Solid content | | 100 | 91 | 97 | 97 | 80 | 95 | 99 | 95.5 | 98.5 | 97.5 | 98 | 88 | 88 | 90 | 90 |
| Resin raw material composition for microporous membrane | parts by weight | 100 | 100 | 100 | 100 | 100 | 100 | 100 | 100 | 100 | 100 | 100 | 100 | 100 | 100 | 100 |
| PL/PW | | - | 10.4 | 5.5 | 5.5 | 1.0 | 2.8 | 23.8 | 62.7 | 64.7 | 12.0 | 5.5 | 0.5 | 0.5 | 2.0 | 2.0 |
| PL/LQ | | - | 9.2 | 27.3 | 27.3 | 2.0 | 14.0 | 95.0 | 20.9 | 64.7 | 36.0 | 41.5 | 2.3 | 2.3 | 6.0 | 6.0 |
| PW/LQ | | - | 0.9 | 5.0 | 5.0 | 2.0 | 5.0 | 4.0 | 0.3 | 1.0 | 3.0 | 7.5 | 5.0 | 5.0 | 3.0 | 3.0 |
| Ratio of PWL0 | % | - | 2 | 0 | 3 | 2 | 2 | 2 | 2 | 2 | 5 | 5 | 5 | 5 | 5 | 5 |
| Ratio of PWL1 | % | - | 90 | 99 | 96 | 74 | 88 | 94 | 85 | 93 | 92 | 90 | 70 | 85 | 85 | 85 |
| Ratio of PWL10 or more | % | - | 3 | 0 | 1 | 8 | 1 | 1 | 2 | 2 | 2 | 2 | 8 | 4 | 3 | 3 |
| Difference in diameter between PWL and pellet (Diameter of PWL - Diameter of pellet) | mm | - | 0.2 | 0.1 | 0.1 | 0.3 | 0.1 | 0.5 | 1.2 | 1.1 | 0.3 | 0.3 | 0.3 | 0.3 | 0.4 | 0.4 |
| Ratio of PWL1 to PWL9 | % | - | 99 | 100 | 100 | 98 | 99 | 99 | 95 | 95 | 98 | 98 | 98 | 98 | 99 | 99 |
| Ratio of particles having particle size of 10 mm or larger | wt.% | - | 0 | 0 | 0 | 0 | 0 | 0 | 1 | 0 | 0 | 0 | 0 | 0 | 0 | 0 |

| | | Reference Ex. | Ex. 2.1 | Ex. 2.2 | Ex. 2.3 | Ex. 2.4 | Ex. 2.5 | Ex. 2.6 | Ex. 2.7 | Ex. 2.8 | Ex. 2.9 | Ex. 2.10 | Ex. 2.11 | Ex. 2.12 | Ex. 2.13 | Ex. 2.14 |
|---|---|---|---|---|---|---|---|---|---|---|---|---|---|---|---|---|
| Dispersibility (torque rise time) | | A | A | A | A | A | A | B | B | B | A | A | A | A | B | B |
| Pipe transportability | | A | A | A | A | A | A | A | A | A | A | A | A | A | A | A |
| Classification performance | | A | A | A | A | A | A | A | A | A | A | A | A | A | A | A |
| Dustiness | | A | A | A | A | A | A | A | A | A | A | A | A | A | A | A |
| Variation in bulk density | | A | A | A | A | A | A | A | A | A | A | A | A | A | A | A |
| Angle of repose | | A | A | A | A | A | A | A | A | A | A | A | A | A | A | A |
| Fisheye | | A | A | A | A | A | A | A | B | B | A | A | A | A | B | B |

Table 10. Production and Evaluation of Resin Raw Material Compositions for Microporous Membrane

| | | Ex. 2.15 | Ex. 2.16 | Ex. 2.17 | Ex. 2.18 | Ex. 2.19 | Ex. 2.20 | Ex. 2.21 | Ex. 2.22 | Comp. Ex. 2.1 | Comp. Ex. 2.2 | Comp. Ex. 2.3 | Comp. Ex. 2.4 | Comp. Ex. 2.5 |
|---|---|---|---|---|---|---|---|---|---|---|---|---|---|---|
| Pellet | Type | PL2 | PL2 | PL2 | PL2 | PL2 | PL2 | PL1 | PL1 | PL1 | PL1 | PL1 | PL1 | PL1 |
| | wt.% | 70 | 75 | 83 | 40 | 80 | 40 | 40 | 40 | 80 | 98.5 | 90 | 15 | 83 |
| Liquid component | Type | LQ1 | LQ1 | LQ1 | LQ1 | LQ1 | LQ1 | LQ1 | LQ1 | - | LQ1 | LQ1 | LQ1 | LQ1 |
| | wt.% | 2 | 5 | 3 | 20 | 5 | 20 | 20 | 20 | - | 0.8 | 0.4 | 25 | 9 |
| Powder | Type | PW1 | PW1 | PW1 | PW1 | PW1 | PW1 | PW1 | PW1 | PW2 | PW2 | PW2 | PW3 | PW2 |
| | wt.% | 28 | 20 | 14 | 40 | 15 | 40 | 40 | 40 | 20 | 0.7 | 9.6 | 60 | 8 |
| Solid content | | 98 | 95 | 97 | 80 | 95 | 80 | 80 | 80 | 100 | 99.2 | 99.6 | 75 | 91 |
| Resin raw material composition for microporous membrane | parts by weight | 100 | 100 | 100 | 100 | 100 | 100 | 100 | 100 | 100 | 100 | 100 | 100 | 100 |
| PL/PW | | 2.5 | 3.8 | 5.9 | 1.0 | 5.3 | 1.0 | 1.0 | 1.0 | 4.0 | 140.7 | 9.4 | 0.3 | 10.4 |
| PL/LQ | | 35.0 | 15.0 | 27.7 | 2.0 | 16.0 | 2.0 | 2.0 | 2.0 | - | 123.1 | 225.0 | 0.6 | 9.2 |
| PW/LQ | | 14.0 | 4.0 | 4.7 | 2.0 | 3.0 | 2.0 | 2.0 | 2.0 | - | 0.9 | 24.0 | 2.4 | 0.9 |
| Ratio of PWL0 | % | 10 | 5 | 5 | 15 | 15 | 16 | 10 | 16 | - | 5 | 5 | 5 | 40 |
| Ratio of PWL1 | % | 88 | 75 | 90 | 75 | 75 | 70 | 75 | 70 | - | 90 | 90 | 90 | 0 |
| Ratio of PWL10 or more | % | 0 | 0 | 0 | 2 | 2 | 3 | 6 | 8 | 0 | 2 | 0 | 2 | 60 |
| Difference in diameter between PWL and pellet (Diameter of PWL - Diameter of pellet) | mm | 1.2 | 0.1 | 0.1 | 0.1 | 0.5 | 1.0 | 1.5 | 2.0 | (-) | 0.1 | 0.3 | 0.3 | - |
| Ratio of PWL1 to PWL9 | % | 99 | 98 | 99 | 99 | 99 | 94 | 99 | 94 | 99 | 98 | 98 | 98 | 50 |
| Ratio of particles having particle size of 10 mm or larger | wt.% | 1 | 0 | 0 | 0 | 0 | 1 | 0 | 4 | 0 | 0 | 0 | 0 | 45 |
| Dispersibility (torque rise time) | | A | A | A | A | A | A | A | A | C | C | A | C | C |
| Pipe transportability | | A | A | A | A | A | A | A | A | B | A | A | B | B |
| Classification performance | | A | A | A | A | A | A | A | A | B | B | B | B | B |
| Dustiness | | A | A | A | A | A | A | A | A | B | B | B | A | A |

(continued)

| | Ex. 2.15 | Ex. 2.16 | Ex. 2.17 | Ex. 2.18 | Ex. 2.19 | Ex. 2.20 | Ex. 2.21 | Ex. 2.22 | Comp. Ex. 2.1 | Comp. Ex. 2.2 | Comp. Ex. 2.3 | Comp. Ex. 2.4 | Comp. Ex. 2.5 |
|---|---|---|---|---|---|---|---|---|---|---|---|---|---|
| Variation in bulk density | A | A | A | A | A | A | A | A | B | A | A | B | B |
| Angle of repose | A | A | A | A | A | A | A | A | B | B | B | B | B |
| Fisheye | A | A | A | A | A | A | A | A | B | A | A | C | A |

Table 11. Production and Evaluation of Microporous Membranes

| | | Ex. 2.1 | Ex. 2.2 | Ex. 2.3 | Ex. 2.4 | Ex. 2.5 | Ex. 2.6 | Ex. 2.7 | Ex. 2.8 | Ex. 2.9 | Ex. 2.10 | Ex. 2.11 | Ex. 2.12 | Ex. 2.13 | Ex. 2.14 |
|---|---|---|---|---|---|---|---|---|---|---|---|---|---|---|---|
| Powder, post-blending | Type | - | - | PW5 | - | - | - | - | - | - | - | PW2 | PW2 | PL3 | PL2 |
| | parts by weight | - | - | 10 | - | - | - | - | - | - | - | 100 | 100 | 15 | 200 |
| PL/PW (after step c) | | - | - | 3.3 | - | - | - | - | - | - | - | 0.2 | 0.2 | 1.3 | 0.3 |
| Polymer content at the time of extrusion | wt.% | 33 | 33 | 33 | 33 | 33 | 33 | 33 | 33 | 33 | 33 | 33 | 33 | 33 | 33 |
| Thickness | $\mu$m | 9 | 9 | 9.3 | 9 | 9 | 9.2 | 8.8 | 9 | 8.8 | 9 | 9.3 | 9.2 | 9.1 | 9.1 |
| Porosity | % | 45 | 44 | 45 | 42 | 44 | 45 | 46 | 46 | 44 | 50 | 48 | 42 | 44 | 41 |
| Air permeability | sec/ 100 cc | 120 | 115 | 122 | 114 | 115 | 132 | 122 | 121 | 120 | 130 | 139 | 114 | 122 | 113 |
| Puncture strength | g | 350 | 366 | 365 | 378 | 359 | 355 | 333 | 346 | 323 | 320 | 345 | 390 | 370 | 399 |

Table 12. Production and Evaluation of Microporous Membranes

| | | | Ex. 2.15 | Ex. 2.16 | Ex. 2.17 | Ex. 2.18 | Ex. 2.19 | Ex. 2.20 | Ex. 2.21 | Ex. 2.22 | Comp. Ex. 2.1 | Comp. Ex. 2.2 | Comp. Ex. 2.3 | Comp. Ex. 2.4 | Comp. Ex. 2.5 |
|---|---|---|---|---|---|---|---|---|---|---|---|---|---|---|---|
| Powder, post-blending | | Type | PW2 | PW2 | PW2 | PW2 | PW2 | PW2 | PW2 | PW2 | - | - | - | - | - |
| | | parts by weight | 200 | 200 | 200 | 200 | 900 | 400 | 200 | 400 | - | - | - | - | - |
| PL/PW (after step c) | | | 0.3 | 0.3 | 0.4 | 0.2 | 0.1 | 0.1 | 0.2 | 0.1 | - | - | - | - | - |
| Polymer content at the time of extrusion | | wt.% | 33 | 33 | 33 | 33 | 33 | 33 | 33 | 33 | 33 | 33 | 33 | 33 | 33 |
| Thickness | | μm | 9 | 9.1 | 9 | 9 | 8.9 | 9 | 9 | 8.9 | 9 | 9 | 9.1 | 8.8 | 9.2 |
| Porosity | | % | 44 | 45 | 44 | 42 | 46 | 45 | 43 | 44 | 43 | 43 | 45 | 44 | 46 |
| Air permeability | | sec/100 cc | 115 | 122 | 115 | 115 | 121 | 124 | 118 | 112 | 115 | 111 | 129 | 121 | 124 |
| Puncture strength | | g | 365 | 359 | 353 | 380 | 345 | 355 | 378 | 355 | 337 | 345 | 360 | 250 | 320 |

INDUSTRIAL APPLICABILITY

The resin raw material composition of the present disclosure is excellent in dispersibility, pipe transportability, and moldability, exhibits limited dustiness and classification, and yields a molded product having favorable physical properties. For example, in an application where a powder and pellets are simultaneously extrusion-molded for the production of a packaging film or a microporous membrane, the resin raw material composition of the present disclosure not only exhibits good dispersibility of the components of the pellets and the powder and does not generate dust even after the blending of the powder and the pellets, but also can be favorably transported without being classified or adhering to a pipe during pipe transportation and is thus favorably extrusion-molded without being classified in a hopper, so that a molded product can be obtained as a film or a microporous membrane in which the generation of fisheyes is extremely limited. Therefore, the resin raw material composition of the present disclosure has an industrial applicability as packaging films, separators of lithium-ion secondary batteries, and the like, which have excellent molding processability and dispersibility.

REFERENCE SIGNS LIST

10: Resin raw material composition of present disclosure
20: Conventional resin raw material composition

**Claims**

1.  A resin raw material composition, comprising:

    resin pellets (PL);
    a powder (PW); and
    a liquid component (LQ),
    wherein
    the resin raw material composition is a resin raw material composition for molding use,
    the resin raw material composition comprises granules in which the surfaces of the resin pellets are at least partially coated with the liquid component, the resin pellets coated with the liquid component are individual particles or an aggregate of plural particles, and the powder is adhered to the liquid component,
    based on a total weight of the resin raw material composition, a ratio (PL/PW) of the amount (wt.%) of the resin pellets with respect to the amount (wt.%) of the powder is 0.01 to 100, and a ratio (PL/LQ) of the amount (wt.%) of the resin pellets with respect to the amount (wt.%) of the liquid component is 1 to 199, and
    based on a total number of the granules, the number of granules comprising an aggregate of 10 or more particles of the resin pellets is 20% or less.

2.  A resin raw material composition, comprising:

    resin pellets (PL);
    a powder (PW); and
    a liquid component (LQ),
    wherein
    the resin raw material composition is a resin raw material composition for a microporous membrane,
    the resin raw material composition comprises granules in which the surfaces of the resin pellets are at least partially coated with the liquid component, the resin pellets coated with the liquid component are individual particles or an aggregate of plural particles, and the powder is adhered to the liquid component,
    based on a total weight of the resin raw material composition, a ratio (PL/PW) of the amount (wt.%) of the resin pellets with respect to the amount (wt.%) of the powder is 0.01 to 100, and a ratio (PL/LQ) of the amount (wt.%) of the resin pellets with respect to the amount (wt.%) of the liquid component is 1 to 199, and
    based on a total number of the granules, the number of granules comprising an aggregate of 10 or more particles of the resin pellets is 20% or less.

3.  The resin raw material composition according to claim 1 or 2, wherein the granules in which the powder is adhered to the liquid component of the resin pellets coated with the liquid component constitute a main component.

4. The resin raw material composition according to any one of claims 1 to 3, wherein

   based on a total number of the granules, the number of granules comprising individual particles or an aggregate of 2 to 9 particles of the resin pellets is 95% or more, and
   the amount of granules having a particle size of 10 mm or more is 1 wt.% or less based on a total weight of the resin raw material composition.

5. The resin raw material composition according to any one of claims 1 to 4, wherein

   based on a total number of the granules, the number of granules comprising individual particles of the resin pellets is 70% or more, and
   the granules comprising individual particles of the resin pellets have a maximum diameter of not less than the particle size of the resin pellets but not greater than the particle size of the resin pellets + 5 mm.

6. The resin raw material composition according to any one of claims 1 to 5, wherein

   based on a total number of the granules, the number of granules comprising an aggregate of plural particles of the resin pellets is less than 30%, and
   when the resin raw material composition further comprises granules that do not comprise the resin pellets and are formed of the powder and the liquid component, the number of the granules that do not comprise the resin pellets is less than 20%, based on a total number of the granules.

7. The resin raw material composition according to any one of claims 1 to 6, wherein, based on a total number of the granules, the number of the granules comprising an aggregate of 10 or more particles of the resin pellets is 1% or less.

8. The resin raw material composition according to any one of claims 1 to 7, wherein the resin pellets comprise at least one selected from the group consisting of polyolefin, PET, polyamide, aramid, polyvinyl chloride, synthetic rubber, ABS, and PPE.

9. The resin raw material composition according to any one of claims 1 to 8, wherein the powder comprises at least one selected from the group consisting of polyethylene, elastomers, PET, polyamide, aramid, and inorganic particles.

10. The resin raw material composition according to any one of claims 1 to 9, wherein the powder has a particle size of 10 nm to 50 $\mu$m.

11. The resin raw material composition according to any one of claims 1 to 10, wherein the liquid component is at least one selected from the group consisting of lubricating oils, mineral oils, and liquid paraffin.

12. The resin raw material composition according to any one of claims 1 to 11, having a variation in bulk density of 10% or less.

13. The resin raw material composition according to any one of claims 1 to 12, having an angle of repose of 30° to 55°.

14. A method of producing a resin raw material composition, wherein

   the resin raw material composition is a resin raw material composition for molding use, and
   the method comprises:

      a coating step of kneading resin pellets (PL) and a liquid component using a blender to coat the surfaces of the resin pellets with the liquid component at least partially; and
      an adhesion step of, after the coating step, adding a powder (PW) to the blender and further kneading the resultant to adhere the powder to the liquid component of the resin pellets coated with the liquid component.

15. The method of producing a resin raw material composition according to claim 14, wherein the torque rise time is 150 seconds or shorter.

16. A method of producing a resin raw material composition, wherein

the resin raw material composition is a resin raw material composition for a microporous membrane, and the method comprises:

a coating step of kneading resin pellets (PL) and a liquid component using a blender to coat the surfaces of the resin pellets with the liquid component at least partially; and
an adhesion step of, after the coating step, adding a powder (PW) to the blender and further kneading the resultant to adhere the powder to the liquid component of the resin pellets coated with the liquid component.

17. The method of producing a resin raw material composition according to claim 16, wherein the torque rise time is 150 seconds or shorter.

18. A method of producing a mixed composition, the method comprising:

a step of producing a resin raw material composition by the method of producing a resin raw material composition according to claim 16 or 17; and
a step of further mixing the resin raw material composition with resin pellets and/or a powder that are the same as or different from the resin pellets (PL) and the powder (PW).

# FIG. 1

# FIG. 2

# FIG. 3

<table>
<tr><td colspan="2" align="center"><b>INTERNATIONAL SEARCH REPORT</b></td><td colspan="2">International application No.<br><br><b>PCT/JP2021/048393</b></td></tr>
</table>

**A. CLASSIFICATION OF SUBJECT MATTER**

*C08J 3/20*(2006.01)i; *C08L 101/00*(2006.01)i; *C08J 9/28*(2006.01)i; *C08J 5/18*(2006.01)i
FI: C08L101/00; C08J3/20 Z CES; C08J5/18 CES; C08J9/28 CES

According to International Patent Classification (IPC) or to both national classification and IPC

**B. FIELDS SEARCHED**

Minimum documentation searched (classification system followed by classification symbols)

C08J3/20; C08L101/00; C08J9/28; C08J5/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-101191 A (ASAHI KASEI CORP) 08 June 2017 (2017-06-08) | 1, 3-15, 18 |
| | claims, paragraphs [0004]-[0005], [0015], [0025], [0029], examples | |
| Y | | 1-18 |
| X | JP 61-188424 A (ASAHI CHEM IND CO LTD) 22 August 1986 (1986-08-22) | 1, 3-15, 18 |
| | claims, p. 2, upper right column, lines 10-12, p. 2, upper right column, line 17 to lower left column, line 12, p. 2, lower right column, line 14 to p. 3, upper left column, line 3, p. 3, upper right column, lines 5-9, examples | |
| X | JP 63-147609 A (FUJI PHOTO FILM CO LTD) 20 June 1988 (1988-06-20) | 1, 3-9, 11-15 |
| | claims, p. 2, lower left column, line 17 to lower right column, line 2, p. 2, lower right column, line 10 to p. 3, upper left column, line 6, examples, fig. 2 | |
| X | JP 50-95363 A (UNITIKA LTD) 29 July 1975 (1975-07-29) | 1, 3-10, 12-15 |
| | claims, p. 1, lower right column, lines 2-10, p. 2, upper left column, line 5 to upper right column, line 1, example 3 | |
| X | JP 2010-6885 A (ACHILLES CORP) 14 January 2010 (2010-01-14) | 1, 3-7, 9-10, 12-13 |
| | claims, paragraphs [0040], [0050], examples | |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **14 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2021/048393**

### C. DOCUMENTS CONSIDERED TO BE RELEVANT

| Category* | Citation of document, with indication, where appropriate, of the relevant passages | Relevant to claim No. |
|---|---|---|
| Y | WO 2007/052839 A1 (ASAHI KASEI CORP) 10 May 2007 (2007-05-10)<br>paragraphs [0029], [0031], [0035], production example 2 | 1-18 |

Form PCT/ISA/210 (second sheet) (January 2015)

INTERNATIONAL SEARCH REPORT
Information on patent family members

| | | | International application No.<br>**PCT/JP2021/048393** |
|---|---|---|---|

| Patent document<br>cited in search report | Publication date<br>(day/month/year) | Patent family member(s) | Publication date<br>(day/month/year) |
|---|---|---|---|
| JP 2017-101191 A | 08 June 2017 | (Family: none) | |
| JP 61-188424 A | 22 August 1986 | (Family: none) | |
| JP 63-147609 A | 20 June 1988 | (Family: none) | |
| JP 50-95363 A | 29 July 1975 | (Family: none) | |
| JP 2010-6885 A | 14 January 2010 | (Family: none) | |
| WO 2007/052839 A1 | 10 May 2007 | (Family: none) | |

Form PCT/ISA/210 (patent family annex) (January 2015)

REFERENCES CITED IN THE DESCRIPTION

**Patent documents cited in the description**

- JP S5939536 A
- JP 2002194132 A
- JP 2006021519 A
- JP 2019142002 A

**Non-patent literature cited in the description**

- DICTIONARY OF POLYMER TECHNOLOGY. Dictionary of Polymer Technology. Taiseisha, Ltd, 2000, 337